# EUROPEAN PATENT APPLICATION

(11) **EP 4 451 715 A1**
(43) Date of publication of application: **23.10.2024**
(21) Application number: 23746094.4
(22) Date of filing: 16.01.2023
(51) Int. Cl.: H04W 4/50, H04W 36/12, H04W 36/32

(54) **COMMUNICATION METHOD AND APPARATUS**

(30) Priority: 26.01.2022 CN 202210096119
(71) Applicant: Huawei Technologies Co., Ltd., Shenzhen, Guangdong 518129 (CN)
(72) Inventor: WANG, Yaxin, Shenzhen, Guangdong 518129 (CN); LI, Yan, Shenzhen, Guangdong 518129 (CN)
(74) Representative: Isarpatent
(86) International application number: PCT/CN2023/072457
(87) International publication number: WO 2023/143212

(57) **Abstract**

This application discloses a communication method and apparatus. The method includes: A first edge configuration server receives a first request message, sends an application function request message to a policy control function network element, and sends a response message for the first request message. The first request message includes an application client profile. The application function request message is used to request to configure a data forwarding path from a terminal to a visited edge enabler server and/or a visited edge configuration server. In this application, data sent by the terminal to the visited edge enabler server and/or the visited edge configuration server may be distributed to a V domain via a visited user plane function network element, instead of being forwarded to a home user plane function network element. For a roaming terminal, although a session anchor is in the home user plane function network element, a request for querying for an edge configuration server can be routed to a corresponding visited edge configuration server. This implements discovery of an edge application server.

## Description

### CROSS-REFERENCE TO RELATED APPLICATIONS

This application claims priority to Chinese Patent Application No. 202210096119.8, filed with the China National Intellectual Property Administration on January 26, 2022 and entitled "COMMUNICATION METHOD AND APPARATUS", which is incorporated herein by reference in its entirety.

### TECHNICAL FIELD

This application relates to the field of roaming technologies, and in particular, to a communication method and apparatus in home-routed roaming.

### BACKGROUND

Multi-access edge computing (multi-access edge computing, MEC) is a technology in which an MEC computing function is deployed close to a device side, to provide a faster service for a user and achieve better network performance. In a home-routed (Home-Routed, HR) roaming (roaming) scenario, an MEC service in a visited domain is accessed. According to a current HR roaming procedure, an anchor of a session established in a roaming access process is in a user plane network element deployed in a home public land mobile network (home public land mobile network, HPLMN). In this case, the session cannot be routed to the visited domain.

### SUMMARY

Embodiments of this application provide a communication method and apparatus, to implement routing to a visited domain.

According to a first aspect, a first communication method is provided. The communication method may be performed by a first communication apparatus. The first communication apparatus may be a communication device or a communication apparatus, for example, a chip system, that can support a communication device in implementing a function needed in the method. For example, the communication device is an edge configuration server. The following uses an example in which the communication device is the edge configuration server for description. The method includes: A first edge configuration server receives a first request message, sends an application function request message to a policy control function network element, and sends a response message for the first request message. The first request message includes an application client profile. The application function request message is used to request to configure a data forwarding path from a terminal to a first visited edge enabler server and/or a first visited edge configuration server.

In this solution, the first edge configuration server sends the application function request message to the policy control function, and may request to configure the data forwarding path from the terminal to the first visited edge enabler server and/or the first visited edge configuration server. Therefore, a message sent by a roaming terminal to a visited edge enabler server and/or a visited edge configuration server can be routed to a visited domain, instead of being forwarded to a home user plane function network element. This helps implement interaction between the roaming terminal and the visited edge enabler server and/or interaction between the roaming terminal and the visited edge configuration server. For example, a request that is for querying for an edge application server and that is sent by the roaming terminal can be routed to the visited edge enabler server and/or the visited edge configuration server, to implement edge application server discovery, to achieve an objective of supporting the roaming terminal in accessing an edge application service in a visited public land mobile network.

In a possible implementation, the application function request message may include address information of the first visited edge enabler server and/or address information of the first visited edge configuration server. In other words, based on the application function request message, the policy control function network element is enabled to determine to configure a data forwarding path from the terminal to which visited edge configuration server or which visited edge enabler server.

In a possible implementation, before the first edge configuration server sends the response message, the first edge configuration server further receives a user plane path change notification from a visited session management function. It may be understood that a user plane path of a session established by the roaming terminal may change, for example, a data forwarding path from the terminal to the visited edge enabler server V-EES and/or the visited edge configuration server V-ECS is configured. In this solution, the user plane path of the session established by the roaming terminal changes, and the visited session management function may notify the first edge configuration server. The first edge configuration server receives the user plane path change notification from the visited session management function, and then sends the response message. In other words, the first edge configuration server determines that the data forwarding path from the terminal to the visited edge enabler server and/or the visited edge configuration server is configured, and then feeds back the response message for the first request message. For the roaming terminal, it may be ensured that the user plane path is configured when the response message is received, so that data to be subsequently sent (for example, the request for querying for the edge application server) may be successfully sent to the visited edge enabler server and/or the visited edge configuration server.

In a possible implementation, the response message includes a first visited edge configuration server profile and/or a second visited edge enabler server profile. The first visited edge configuration server profile may indicate the first visited edge configuration server, and the first visited edge enabler server profile may indicate the first visited edge enabler server. For example, after the first visited edge enabler server and/or the first visited edge configuration server are determined, the terminal may be notified, so that the terminal requests the first visited edge configuration server to discover the edge application server. This reduces a failure rate of requesting to discover the edge application server.

In a possible implementation, the first edge configuration server determines the first visited edge enabler server and/or the first visited edge configuration server based on the application client profile. For example, the application client profile may include a roaming identifier, information about a terminal device, and the like. The first edge configuration server may determine the first visited edge enabler server and/or the first visited edge configuration server based on the application client profile. The first visited edge enabler server may also be considered as a visited edge enabler server that supports a service requested by the terminal. Similarly, the first visited edge configuration server is a visited edge configuration server of the service requested by the terminal. In this solution, the first edge configuration server may select an appropriate visited edge configuration server and visited edge enabler server based on an application requirement, to avoid a failure of discovering the edge application server.

In a possible implementation, if the first edge configuration server is the first visited edge configuration server or a second visited edge configuration server, that a first edge configuration server receives a first request message includes: The first edge configuration server receives the first request message from a home edge configuration server. That a first edge configuration server sends a response message for the first request message includes: The first edge configuration server sends the response message to the home edge configuration server.

In a possible implementation, if the first edge configuration server is the first visited edge configuration server or a second visited edge configuration server, that a first edge configuration server receives a first request message includes: The first edge configuration server receives the first request message from the terminal. That a first edge configuration server sends a response message for the first request message includes: The first edge configuration server sends the response message to the terminal.

In a possible implementation, the first edge configuration server is the first visited edge configuration server or the second visited edge configuration server, and the policy control function network element is a visited policy control function network element.

In another possible implementation, the first edge configuration server is a home edge configuration server, and the policy control function network element is a home policy control function network element. The edge configuration server interacts with the policy control function network element in the visited domain or a home domain, to reduce a quantity of times of information interaction and simplify an interaction process.

In a possible implementation, the first edge configuration server is the home edge configuration server, and the home edge configuration server obtains information about the first visited edge enabler server and/or the first visited edge configuration server from a third visited edge configuration server.

According to a second aspect, a second communication method is provided. The communication method may be performed by a second communication apparatus. The second communication apparatus may be a communication device or a communication apparatus, for example, a chip system, that can support a communication device in implementing a function needed in the method. For example, the communication device is a policy control function network element. The following uses an example in which the communication device is the policy control function network element for description. The method includes: The policy control function network element receives an application function request, and sends a second request message to a visited session management function network element based on the application function request. The application function request is used to configure a data forwarding path from a terminal to a first visited edge enabler server and/or a first visited edge configuration server. The second request message includes address information of the first visited edge enabler server and/or address information of the first visited edge configuration server.

In a possible implementation, the AF request includes the address information of the first visited edge enabler server and/or the address information of the first visited edge configuration server.

For technical effects brought by the second aspect or the possible implementations of the second aspect, refer to the descriptions of the technical effects of the first aspect or the corresponding implementations.

According to a third aspect, a third communication method is provided. The communication method may be performed by a third communication apparatus. The third communication apparatus may be a communication device or a communication apparatus, for example, a chip system, that can support a communication device in implementing a function needed in the method. For example, the communication device is a visited session management function network element. The following uses an example in which the communication device is the visited session management function network element for description. The method includes: The visited session management function network element receives a second request message from a policy control function network element, and configures a data forwarding path for a visited user plane function network element. The second request message is used to configure a data forwarding path from a terminal to a first visited edge enabler server and/or a first visited edge configuration server.

In a possible implementation, the second request message includes address information of the first visited edge enabler server and/or address information of the first visited edge configuration server.

For technical effects brought by the third aspect or the possible implementations of the third aspect, refer to the descriptions of the technical effects of the first aspect or the corresponding implementations.

According to a fourth aspect, a fourth communication method is provided. The communication method may be performed by a first communication apparatus. The first communication apparatus may be a communication device or a communication apparatus, for example, a chip system, that can support a communication device in implementing a function needed in the method. For example, the communication device is a data management network element. The following uses an example in which the communication device is a visited policy control function network element for description. The method includes:

The data management network element receives an application function request from an edge configuration server, and stores address information of a first visited edge configuration server and/or address information of a first visited edge enabler server based on the application function request. The application function request includes one or more of the following: the address information of the first visited edge configuration server and/or the address information of the first visited edge enabler server, a roaming identifier, a terminal identifier, or a session identifier. The roaming identifier indicates whether a terminal is a roaming terminal. The terminal identifier includes one or more of the following: a generic public subscription identifier (generic public subscription identifier, GPSI), a subscription permanent identifier (subscription permanent identifier, SUPI), a data network name (data network name, DNN), single network slice selection assistance information (single network slice selection assistance information, S-NSSAI), or an application descriptor (application descriptor) of the terminal. The session identifier includes the DNN, the S-NSSAI, the application descriptor, and/or the like that correspond/corresponds to the terminal. In this solution, the edge configuration server may send, to the data management network element for storage based on the application function request, address information of a visited edge configuration server supporting a roaming edge computing function and/or address information of a visited edge enabler server supporting a roaming edge computing function. Therefore, a visited policy control function network element can be provided with a visited edge configuration server and/or a visited edge enabler server that correspond/corresponds to the roaming terminal, the visited policy control function network element is enabled to determine to request to configure a data forwarding path from the terminal to which visited edge configuration server or which visited edge enabler server. This facilitates subsequent implementation of interaction between the roaming terminal and the first visited edge enabler server and/or the first visited edge configuration server. For example, a request that is for querying for an edge application server and that is sent by the roaming terminal can be routed to the first visited edge enabler server and/or the first visited edge configuration server, to implement edge application server discovery, to achieve an objective of supporting the roaming terminal in accessing an edge application service in a visited public land mobile network.

In a possible implementation, the method further includes: The data management network element receives a subscription request message of the visited policy control function network element, and sends a notification message to the visited policy control function network element. The subscription request message is used to request to subscribe to a notification message of an application function request associated with a first home-route session of the terminal. The notification message includes the address information of the first visited edge configuration server associated with the first home-route session and/or the address information of the first visited edge enabler server associated with the first home-route session.

According to a fifth aspect, a fifth communication method is provided. The communication method may be performed by a fifth communication apparatus. The fifth communication apparatus may be a communication device or a communication apparatus, for example, a chip system, that can support a communication device in implementing a function needed in the method. For example, the communication device is a policy control function network element. The following uses an example in which the communication device is a visited policy control function network element for description. The method includes:

The visited policy control function network element receives a first request message from a visited session management function network element, obtains, from a data management network element, address information of a first visited edge configuration server associated with a first home-route session and/or address information of a first visited edge enabler server associated with a first home-route session, and sends a first response message to the visited session management function network element. The first request message indicates that an edge computing function of a visited public land mobile network is requested to be used in a first home-route session of a terminal. The first response message includes the address information of the first visited edge configuration server and/or the address information of the first visited edge enabler server. It may be understood that the first visited edge configuration server and/or the first visited edge enabler server that are/is associated with the first home-route session can enable the terminal to be routed to a visited domain. In this solution, the data management network element may store a correspondence between a roaming terminal and the address information of the first visited edge configuration server and/or the address information of the first visited edge enabler server based on an application function request. The visited policy control function network element may query the data management network element for the visited edge configuration server and/or the visited edge enabler server that are/is associated with the first home-route session, and notify the visited session management function network element. In this way, the visited session management function network element may subsequently request to configure the terminal to the visited edge configuration server and/or the visited edge enabler server that are/is associated with the first home-route session, to ensure that the terminal is routed to the visited domain.

In a possible implementation, the first request message includes one or more of the following corresponding to the terminal: a generic public subscription identifier, a subscription permanent identifier, a data network name, single network slice selection assistance information, or an identifier of the first home-route session.

In a possible implementation, that the visited policy control function network element obtains, from a data management network element, address information of a first visited edge configuration server managed by a first home-route and/or address information of a first visited edge enabler server managed by a first home-route includes: The visited policy control function network element sends a subscription request message to the data management network element, and receives a notification message from the data management network element. The subscription request message is used to request to subscribe to a notification message of the application function request associated with the first home-route session. The notification message includes the address information of the first visited edge configuration server and/or the address information of the first visited edge enabler server.

In a possible implementation, the address information of the first visited edge configuration server and/or the address information of the first visited edge enabler server are/is stored in the data management network element by an edge configuration server based on the application function request.

In a possible implementation, the edge configuration server is the first visited edge configuration server or a second visited edge configuration server, and the data management network element is a visited data management network element.

According to a sixth aspect, a sixth communication method is provided. The communication method may be performed by a third communication apparatus. The third communication apparatus may be a communication device or a communication apparatus, for example, a chip system, that can support a communication device in implementing a function needed in the method. For example, the communication device is a visited session management function network element. The following uses an example in which the communication device is the visited session management function network element for description. The method includes:

The visited session management function network element receives first indication information, sends a first request message to a visited policy control function network element, and receives a first response message from the visited policy control function network element. The first indication information indicates that an edge computing function of a visited public land mobile network is used in a first home-route session of a terminal. The first request message indicates that the edge computing function of the visited public land mobile network is used in the first home-route session of the terminal. The first response message includes address information of a first visited edge configuration server associated with the first home-route and/or address information of a first visited edge enabler server associated with the first home-route.

In a possible implementation, that the visited session management function network element receives first indication information includes:

The visited session management function network element receives a session establishment request message from the terminal, where the session establishment request includes the first indication information. Alternatively, the visited session management function network element receives a session modification request message from the terminal, where the session modification request message includes the first indication information.

In a possible implementation, the method further includes: The visited session management function network element configures, for a visited user plane function network element, a rule for forwarding data to the first visited edge configuration server and/or the first visited edge enabler server.

For technical effects brought by the fifth aspect and sixth aspect, refer to the descriptions of the technical effects in the fourth aspect.

According to a seventh aspect, a communication apparatus is provided. The communication apparatus may be the communication apparatus in any one of the first aspect to the sixth aspect. The communication apparatus has a function of the foregoing communication apparatus. The communication apparatus is, for example, the edge configuration server (for example, the visited edge configuration server or the home edge configuration server) in any one of the first aspect to the sixth aspect. Alternatively, the communication apparatus is, for example, the policy control function network element (for example, the visited policy control function network element or the home policy control function network element) in any one of the first aspect to the sixth aspect. Alternatively, the communication apparatus is, for example, the session management function network element (for example, the visited session management function network element or the home session management function network element) in any one of the first aspect to the sixth aspect. Alternatively, the communication apparatus is, for example, the data management network element in any one of the fourth aspect to the sixth aspect.

In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules. These units (modules) may perform corresponding functions in the method example in any one of the first aspect to the sixth aspect. For details, refer to detailed descriptions in the method example. Details are not described herein again.

According to an eighth aspect, an embodiment of this application provides a communication apparatus. The communication apparatus may be the communication apparatus in the eighth aspect of the foregoing embodiments, or a chip or a chip system disposed in the communication apparatus in the eighth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the function of the method in any one of the first aspect to the sixth aspect.

According to a ninth aspect, an embodiment of this application provides a communication apparatus. The communication apparatus includes an input/output interface and a logic circuit. The input/output interface is configured to input and/or output information. The logic circuit is configured to perform the method in any one of the first aspect to the sixth aspect.

According to a tenth aspect, an embodiment of this application provides a chip system. The chip system includes a processor, may further include a memory and/or a communication interface, and is configured to implement the method in any one of the first aspect to the sixth aspect. In a possible implementation, the chip system further includes the memory, configured to store a computer program. The chip system may include a chip, or may include a chip and another discrete device.

According to an eleventh aspect, an embodiment of this application provides a communication system. The communication system includes at least two of the following communication apparatuses: a communication apparatus that is in the eighth aspect and that can implement a function of the edge configuration server in any one of the first aspect to the sixth aspect, a communication apparatus that can implement a function of the policy control function network element in any one of the first aspect to the sixth aspect, a communication apparatus that can implement a function of the session management function network element in any one of the first aspect to the sixth aspect, and a communication apparatus that can implement a function of the user plane function network element in any one of the first aspect to the sixth aspect. Optionally, the communication system further includes a communication apparatus that can implement a function of the data management network element in any one of the fourth aspect to the sixth aspect.

According to a twelfth aspect, this application provides a computer-readable storage medium. The computer-readable storage medium stores a computer program. When the computer program is run, the method in any one of the first aspect to the sixth aspect is implemented.

According to a thirteenth aspect, a computer program product is provided. The computer program product includes computer program code. When the computer program code is run, the method in any one of the first aspect to the sixth aspect is performed.

For beneficial effects of the seventh aspect to the thirteenth aspect and the implementations of the seventh aspect to the thirteenth aspect, refer to the descriptions of the beneficial effects of the first aspect to the sixth aspect and the implementations of the first aspect to the sixth aspect.

### BRIEF DESCRIPTION OF DRAWINGS

FIG. 1 is a schematic of a network architecture in a local traffic steering roaming scenario;
FIG. 2 is a schematic of an MEC application layer architecture;
FIG. 3 is a schematic flowchart of EAS discovery;
FIG. 4 is a schematic flowchart of a first communication method according to an embodiment of this application;
FIG. 5 is a schematic flowchart of an example of a first communication method according to an embodiment of this application;
FIG. 6 is a schematic flowchart of another example of a first communication method according to an embodiment of this application;
FIG. 7 is a schematic flowchart of a second communication method according to an embodiment of this application;
FIG. 8 is a diagram of a structure of a communication apparatus according to an embodiment of this application; and
FIG. 9 is a diagram of another structure of a communication apparatus according to an embodiment of this application.

### DESCRIPTION OF EMBODIMENTS

Technical solutions provided in this application may be applied to various communication systems, for example, a 5th generation (5th generation, 5G) system, for example, a new radio (new radio, NR) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

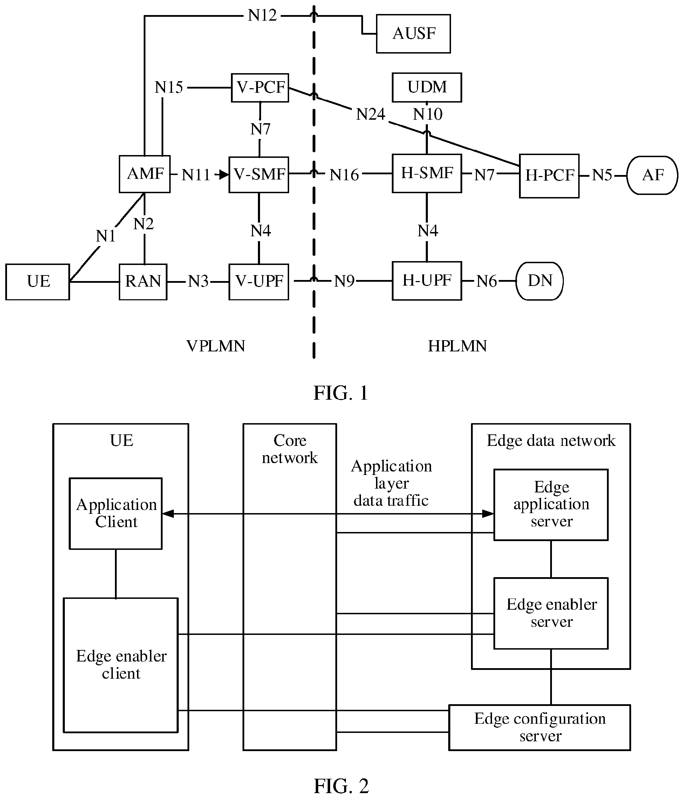

In an example, FIG. 1 is a schematic of a network architecture to which an embodiment of this application is applicable. The network architecture includes two parts: a home public land mobile network and a visited public land mobile network. The home public land mobile network is a public land mobile network signed by user equipment (user equipment, UE), and represents a home operator of a subscriber. The visited public land mobile network is a public land mobile network accessed by the UE after the UE leaves coverage of the home public land mobile network. It may be understood that, when the UE leaves the coverage of the home public land mobile network due to movement or another reason, if a public land mobile network meets the following conditions: (1) a current position of the UE may be covered, and (2) an operator of the public land mobile network and an operator of the home public land mobile network of the UE sign a roaming agreement, the UE may access the public land mobile network, where the public land mobile network is the visited public land mobile network. Behavior of the UE accessing the visited public land mobile network may be referred to as roaming. Roaming scenarios may be classified into local breakout (local breakout, LBO) roaming and HR roaming. In FIG. 1, an example in which the network architecture is an HR roaming architecture is used.

The visited public land mobile network includes a network slice selection network element, a policy control network element, an access management network element, a session management network element, and the like. All these network elements may communicate with each other based on a service method. In addition, the access management network element may communicate with the UE through an N1 interface, the access management network element may communicate with an access network through an N2 interface, the session management network element may communicate with a user plane network element through an N4 interface, the UE can communicate with the access network, the access network element may communicate with the user plane network element through an N3 interface, and the user plane network element may communicate with a data network through an N6 interface.

The home public land mobile network includes a unified data management network element, a session management network element, a policy control network element, an application network element, and the like. All these network elements may also communicate with each other based on a service method. An authentication server network element may communicate with the unified data management network element through an N13 interface, and the unified data management network element may communicate with the session management network element through an N10 interface. The session management network element may communicate with the policy control network element through an N7 interface, the policy control network element may communicate with the AF through an N5 interface, and the session management network element may communicate with a user plane network element through an N4 interface. During the roaming, the UE accesses the visited public land mobile network, and the access management network element, the session management network element, and the like that are in the visited public land mobile network and the home public land mobile network communicate with each other, so that a network element in the visited public land mobile network can communicate with a network element in the home public land mobile network.

It may be understood that both the visited public land mobile network and the home public land mobile network may have a network element that has a same function. For example, the visited public land mobile network includes a session management function (session management function, SMF), and the home public land mobile network also includes an SMF. To distinguish between the visited public land mobile network and the home public land mobile network, the network element in the visited public land mobile network is denoted as a visited network element, and the network element in the home public land mobile network is denoted as a home network element. For example, the SMF included in the visited public land mobile network is denoted as a visited SMF (visited SMF, V-SMF), and the SMF included in the home public land mobile network is denoted as a home SMF (home SMF, H-SMF).

The following briefly describes devices shown in FIG. 1.
(1) The UE has a wireless transceiver function, and may send a signal to a network device, or receive a signal from a network device. The user equipment is sometimes also referred to as a terminal device, a terminal, an access station, a UE station, a remote station, a wireless communication device, a user apparatus, or the like. In embodiments of this application, the terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, V2X, machine-to-machine/machine type communication (machine-to-machine/machine type communication, M2M/MTC), internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, a smart office, a smart wearable, smart transportation, a smart city (smart city), an unmanned aerial vehicle, and a robot. By way of example and not limitation, in embodiments of this application, the terminal device may alternatively be a wearable device. In addition, in embodiments of this application, the terminal device may be an apparatus configured to implement a function of a terminal, or may be an apparatus, for example, a chip system, that can support the terminal device in implementing the function. The apparatus may be installed in the terminal device. For example, the terminal device may alternatively be a vehicle detector. In embodiments of this application, the chip system may include a chip, or may include a chip and another discrete device. In the technical solutions provided in embodiments of this application, an example in which the apparatus configured to implement the function of the terminal is the terminal device is used for describing the technical solutions provided in embodiments of this application. It should be noted that, in embodiments of this application, an example in which the terminal or the terminal device is the UE is used for description. The user equipment may also have another name. This is not limited in embodiments of this application.
(2) An access network device includes an access network device and/or a core network device that are/is accessed to a mobile communication system by the terminal device in a wireless manner. The access network device includes, for example, a radio access network (radio access network, RAN) device. The access network device includes but is not limited to an evolved NodeB (evolved NodeB) in an LTE system or a long term evolution-advanced (long term evolution-advanced, LTE-A) system, where the evolved NodeB may be referred to as an eNB or an e-NodeB for short. The eNB is an apparatus that is deployed in a radio access network, that meets a fourth generation (fourth generation, 4G) mobile communication technology standard, and that provides a wireless communication function for the terminal device. Alternatively, the network device may be a new radio controller (new radio controller, NR controller), a (gNodeB, gNB) in a 5th generation (5th generation, 5G) mobile communication technology system, a central network element (central unit), a new radio base station, a remote radio module, a micro base station (also referred to as a small cell), a relay (relay), a distributed network element (distributed unit), a macro base station in various forms, a transmission reception point (transmission reception point, TRP), a transmission measurement function (transmission measurement function, TMF), a transmission point (transmission point, TP), or any other radio access device. Alternatively, the network device may include a radio network controller (radio network controller, RNC), a wireless fidelity (wireless fidelity, Wi-Fi) access point (access point, AP), a BBU pool (BBU pool) and an RRU in a cloud radio access network (cloud radio access network, CRAN), or the like. A specific technology and a specific device form used by the network device are not limited in embodiments of this application. The network device may correspond to the eNB in the 4G system, and correspond to the gNB in the 5G system. In addition, the base station in embodiments of this application may include a central unit (central unit, CU) and a distributed unit (distributed unit, DU), and a plurality of DUs may be centrally controlled by one CU. In addition, in some embodiments, a control plane (control plane, CP) and a user plane (user plane, UP) that are of the CU may be separated into different entities for implementation, where the entities are respectively a control-plane CU entity (CU-CP entity) and a user-plane CU entity (CU-UP entity). The 5G system is used as an example, the core network device includes an access and mobility management function (access and mobility management function, AMF), unified data management (unified data management, UDM), a UPF, or the like.
(3) The access management network element is mainly used for attachment, mobility management, and a tracking area update procedure of a terminal in a mobile network. The access management network element terminates a non-access stratum (non-access stratum, NAS) message, completes registration management, connection management, and reachability management, allocates a tracking area list (tracking area list, TA list), completes mobility management and the like, and transparently routes a session management (session management, SM) message to the session management network element. In a 5G communication system, the access management network element may be an access and mobility management function (access and mobility management function, AMF). In a future communication system (for example, a 6G communication system), the access and mobility management network element may still be an AMF network element, or may have another name. This is not limited in this application.
(4) The session management network element is mainly used for session management in the mobile network, for example, session establishment, modification, and release. A specific function is, for example, assigning an internet protocol (internet protocol, IP) address to the terminal or selecting a user plane network element that provides a packet forwarding function. In the 5G communication system, the session management network element may be an SMF network element. In the future communication system (for example, the 6G communication system), the session management network element may still be an SMF network element, or may have another name. This is not limited in this application.
(5) The user plane network element is mainly configured to process a user packet, where the processing is, for example, forwarding, charging, or lawful interception. The user plane network element may also be referred to as a protocol data unit (protocol data unit, PDU) session anchor (PDU session anchor, PSA). In the 5G communication system, the user plane network element may be a user plane function (user plane function, UPF). In the future communication system (for example, the 6G communication system), the user plane network element may still be a UPF network element, or may have another name. This is not limited in this application.
(6) The policy control network element has a user subscription data management function, a policy control function, a charging policy control function, a quality of service (quality of service, QoS) control function, and the like. In the 5G communication system, the policy control network element may be a PCF. In the future communication system (for example, the 6G communication system), the policy control network element may still be a PCF network element, or may have another name. This is not limited in this application.
(7) The authentication server network element is mainly configured to perform security authentication on the terminal device. In the 5G communication system, the authentication server network element may be an authentication server function (authentication server function, AUSF). In the future communication system (for example, the 6G communication system), the authentication server network element may still be an AUSF network element, or may have another name. This is not limited in this application.
(8) The data management network element is mainly configured to store and/or manage subscription information, policy information, and the like of the terminal device. The data management network element may be a unified data management network element and/or a unified data repository network element. For example, in the 5G communication system, the unified data management network element may be a unified data management (unified data management, UDM) network element. In the future communication system (for example, the 6G communication system), the unified data management network element may still be a UDM network element, or may have another name. This is not limited in this application. For example, in the 5G communication system, the unified data repository network element may be a unified data repository (unified data repository, UDR) network element. In the future communication system (for example, the 6G communication system), the unified data repository network element may still be a UDR network element, or may have another name. This is not limited in this application.
(9) A network exposure network element may expose some functions of a network to an application in a controlled manner. In the 5G communication system, the network exposure network element may be an NEF. In the future communication system (for example, the 6G communication system), the network exposure network element may still be an NEF network element, or may have another name. This is not limited in this application.
(10) The data network (data network, DN) is mainly an operator network that provides a data service for the UE, for example, an internet (Internet), a third-party service network, and an IP multimedia service (IP multimedia service, IMS) network.

It should be understood that the foregoing network elements may be network elements in a hardware device, software functions running on dedicated hardware, or virtualized functions instantiated on a platform (for example, a cloud platform).

For ease of description, this application is described by using an example in which the access management network element is the AMF network element, the session management network element is the SMF network element, the unified data repository network element is the UDR network element, the unified data management network element is the UDM network element, and the policy control network element is the PCF network element. Further, the AMF network element is referred to as an AMF for short, the SMF network element is referred to as an SMF for short, the UDR network element is referred to as a UDR for short, the UDM network element is referred to as UDM for short, and the PCF network element is referred to as a PCF for short. In other words, in subsequent descriptions in this application, the AMF may be replaced with the access management network element, the SMF may be replaced with the session management network element, the UDR may be replaced with the unified data repository network element, the UDM may be replaced with the unified data management network element, and the PCF may be replaced with the policy control network element.

To help a person skilled in the art understand the technical solutions provided in embodiments of this application, the following describes the technical solutions related to embodiments of this application. First, content related to MEC is described.

The MEC may be understood as an edge-based big data processing platform. To be specific, a conventional data center is divided into various small data centers, and the small data centers are placed on edge nodes (servers) of a network, to be closer to a user. In this way, a faster service is provided for the user and better network performance is achieved. In other words, the MEC offloads (offloads) computing load on a terminal side to a computing server at a network edge, and provides, at the network edge, computing, storage, and processing capabilities similar to those on a cloud.

FIG. 2 is a schematic of an MEC architecture. A UE side includes one or more application clients (application clients, ACs) and one or more edge enabler clients (edge enabler clients, EECs). The application client may be considered as an application residing on a terminal, and is configured to perform a client function. A network edge side includes an edge data network (edge data network, EDN) and an edge configuration server (edge configuration server, ECS). The EDN is a local data network, including an edge application server (edge application server, EAS) and an edge enabler server (edge enabler server, EES). The EES supports invocation and exposure functions of an application programming interface (application programming interface, API) specified in 3GPP TS 23.222, and may be configured to provide a support function needed by the EAS and the EEC. For example, the EES may provide an EAS profile for the AC via the EEC, so that the AC exchanges application layer data traffic with the EAS. For another example, the EES may alternatively receive related information about EAS registration. The EEC may be configured to: provide a support function needed by the application client, and discover an available EAS in the EDN. For example, the EEC is configured to obtain and provide a profile to exchange the application layer data traffic with the EAS. The ECS is configured to provide a support function needed for connecting the EEC to the EES. For example, the ECS provides an Edge profile for the EEC. The profile may include information needed for connecting the EEC to the EES, for example, service area information applicable to a local area data network (local area data network, LADN). The profile may further include information for establishing a connection between the ECS and the EES, for example, a uniform resource identifier (uniform resource identifier, URI). The EAS is an application server deployed in the EDN, and is configured to perform a server function. The EAS may use a core network capability in different manners. For example, if the EAS is an entity trusted by a core network, the EAS may directly invoke a core network function API; the EAS may invoke the core network capability via the EES; or the EAS may invoke the core network capability via a network exposure function (for example, an SCEF or NEF network element).

It should be noted that, in FIG. 2, that UE includes at least one edge enabler client is used as an example. In other words, the at least one edge enabler client is deployed in the UE. Interaction between another device and the edge enabler client may also be considered as interaction between the another device and the UE. Therefore, in the descriptions about message interaction and the like in this application, the edge enabler client may alternatively be replaced with the UE. A deployment position of the edge enabler client is not limited in embodiments of this application. For example, the edge enabler client in embodiments of this application may be independent of the UE, in other words, the edge enabler client is not deployed in the UE. When the edge enabler client and the UE are independently deployed, the edge enabler server may exchange information with the UE. For example, the edge enabler server may obtain an application client profile (AC profile) from the UE. In embodiments of this application, unless otherwise specified, the edge enabler client and the UE may be replaced.

Specific names of the edge enabler client, the edge data network, the edge configuration server, the edge application server, and the edge enabler server are not limited in embodiments of this application. For example, in a 5G communication system, the edge enabler client may be the EEC. In a future communication system (for example, a 6G communication system), the edge enabler client may also have another name. For ease of description, in this application, an example in which the edge enabler client may be the EEC, the edge data network may be the EDN, the edge configuration server may be the ECS, the edge application server may be the EAS, and the edge enabler server may be the EES is used. In other words, the EEC described subsequently in this application may be replaced with the edge enabler client, the EDN may be replaced with the edge data network, the ECS may be replaced with the edge configuration server, the EAS may be replaced with the edge application server, and the EES may be replaced with the edge enabler server.

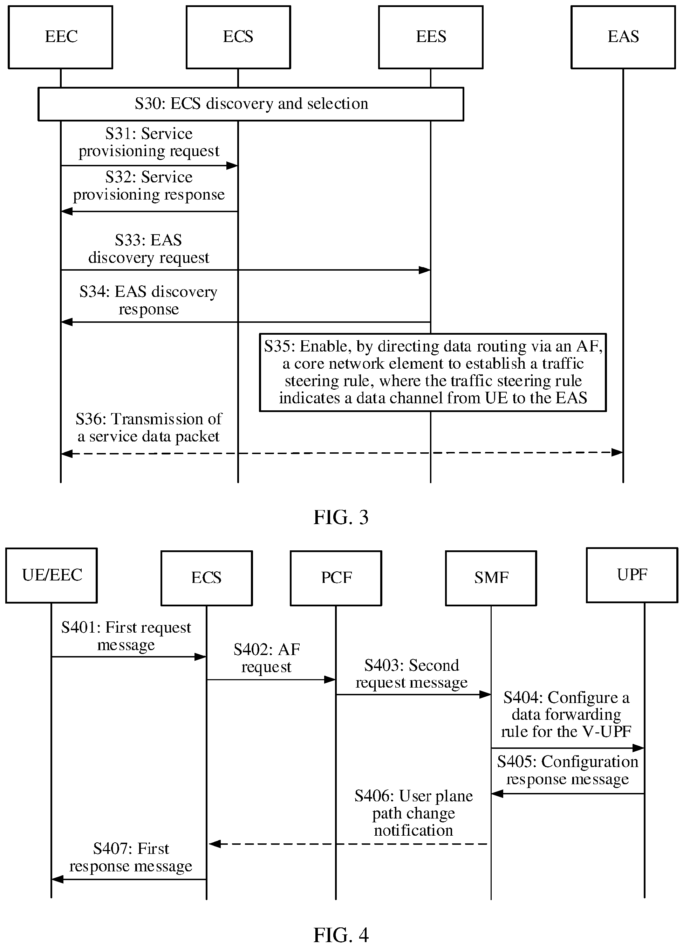

The UE side may interact with the edge data network via the core network. For example, the application client is connected to the EAS, and may transmit the application layer data traffic (which may also be considered as a computing task) to the EAS. In this way, advantages of edge computing may be used to use services of an application program. When accessing a service, the UE may request the available EAS, to perform transmission of a service data packet with the requested EAS. The architecture shown in FIG. 2 is used as an example. For an EAS discovery procedure, refer to FIG. 3.

S30: An EEC performs ECS discovery and selection.

For example, an operator may configure an ECS address in the EEC, so that the EEC can determine which ECSs are available. For another example, an SMF sends ECS information to UE by using a protocol configuration option (protocol configuration option, PCO) message. The PCO message may indicate the ECS information, and the UE provides the ECS information for the EEC, so that the EEC may determine an available ECS.

S31: The EEC sends a service provisioning request to the ECS.

For example, the EEC sends the service provisioning request to the ECS based on the ECS address after a session is established.

S32: The ECS sends a service provisioning response to the EEC.

For example, the ECS may feed back the service provisioning response to the EEC based on position information and the like of the UE. The service provisioning response may include a list of available EESs.

S33: The ECS sends an EAS discovery request to the EES.

For example, the ECS selects one EES based on the EES list carried in the service provisioning response, and sends the EAS discovery request to the EES.

S34: The EES sends an EAS discovery response to the EEC.

The EES responds to the EAS discovery request and sends the EAS discovery response to the EEC. The EAS discovery response includes an available EAS address.

S35: The EES enables, by influencing data routing (influencing traffic routing) via an AF, a core network element to establish a traffic steering rule, where the traffic steering rule indicates a data forwarding path from the UE to an EAS. In this embodiment of this application, the data routing may also be referred to as service routing, traffic routing, transmission routing, or the like. The influencing may also be understood as directing. For example, the influencing the data routing may also be referred to as directing the data routing.

S36: The UE performs transmission of a service data packet with the EAS based on the traffic steering rule.

As shown in the procedure shown in FIG. 3, an EAS to be used by the UE may be discovered, and the transmission of the service data packet is performed with the EAS. However, in an HR roaming scenario, an anchor of a session established in a roaming process is in an H-UPF. Therefore, a V-UPF does not send data to a visited network element (for example, a V-ECS and/or a V-EES). In this case, data sent by the UE may not be routed to a visited domain. However, the EAS to be used by the UE is located in a visited public land mobile network (visited public land mobile network, VPLMN), and the V-ECS and/or the V-EES need/needs to participate in a discovery and selection procedure of the EAS. Therefore, based on the current HR roaming procedure, the EAS cannot be discovered for the UE.

In view of this, the technical solutions in embodiments of this application are provided. The following describes the technical solutions provided in embodiments of this application with reference to accompanying drawings. In the accompanying drawings corresponding to embodiments of this application, steps represented by dashed lines are all optional steps. In the following embodiments, an example in which the network architecture shown in FIG. 1 is applied is used. It should be noted that the following uses only the network architecture shown in FIG. 1 as an example. A network architecture applicable to embodiments of this application is not limited to FIG. 1. Any network architecture that can implement functions of the foregoing network elements is applicable to embodiments of this application. In addition, the network architecture shown above may further include more other network elements, for example, a network repository function (network function (NF) repository function, NRF) network element. A roaming terminal in the following may include a terminal in an HR scenario.

FIG. 4 is a schematic flowchart of a first communication method according to an embodiment of this application, and is applied to the foregoing HR scenario. A specific procedure of the communication method is described as follows.

S401: A first ECS receives a first request message, where the first request message includes an application client profile (AC profile).

When UE (or an EEC) needs to use an MEC function of a VPLMN, the UE (or the EEC) may send the first request message to the first ECS. Correspondingly, the first ECS may receive the first request message from the UE or the EEC. The first request message may be used to request to use the MEC function of the VPLMN. Alternatively, it may be understood that the first request message may be used to request to access an MEC service of the VPLMN. It may be understood that V-ECSs and/or V-EESs corresponding to different MEC services are also different. In other words, there may be a correspondence between the V-ECS and the MEC service, and/or there may be a correspondence between the V-EES and the MEC service. From this perspective, it may also be considered that the first request message may be used to request a V-ECS and/or a V-EES that support/supports the MEC service. The V-ECS that supports the MEC service may also be understood as an available V-ECS. Similarly, the V-EES that supports the MEC service may also be understood as an available V-ECS. From this perspective, the first request message may alternatively be used to request the available V-ECS and/or V-EES. It should be understood that the available V-ECS may be a specific V-ECS, a V-ECS determined by the UE, a V-ECS corresponding to the UE, a V-ECS that supports a service requested by the UE, or the like. Similarly, the available V-EES may be a specific V-EES, a V-EES determined by the UE, a V-EES corresponding to the UE, a V-EES that supports the service requested by the UE, or the like. For ease of description, in this specification, the available V-ECS is denoted as a first V-ECS, and the available V-EES is denoted as a first V-EES. It should be noted that the first V-ECS may include one or more V-ECSs, and the first V-EES may include one or more V-EESs.

A specific name of the first request message is not limited in this embodiment of this application. For example, the first request message may also be referred to as a service request message, or may be referred to as a service provisioning request (service provisioning request) message. For another example, the first request message may be referred to as an availability request (availability request) message.

In an example, the first request message may include the application client profile (AC profile), and the first ECS may determine the first V-EES and/or the first V-ECS based on the AC profile. The AC profile may include one or more of the following: a roaming identifier, an AC ID, information about an EAS list that can meet an application client key performance indicator (key performance indicator, KPI), an AC type (type), an expected application client geographical service area (expected AC geographical service area), or the like. The roaming identifier may be a VPLMN ID, or may be indication information indicating roaming. For example, the roaming identifier may be 1-bit information. If a value of the 1-bit is "0", it indicates that the UE is roaming UE; and on the contrary, if a value of the 1-bit is "1", it indicates that the UE is not roaming UE. Alternatively, if a value of the 1-bit is "1", it indicates that the UE is roaming UE; and on the contrary, if a value of the 1-bit is "0", it indicates that the UE is not roaming UE. Alternatively, the roaming identifier may further occupy more bits. This is not limited.

In another example, the first request message may further include information about the UE, for example, position information of the UE. The first ECS may determine the first V-EES and/or the first V-ECS based on the AC profile and the position information of the UE. It should be noted that a specific manner of determining the first V-EES and/or the first V-ECS is not limited in this embodiment of this application. For example, the first ECS may alternatively obtain information about the first V-EES and/or information about the first V-ECS from another network element, to determine the first V-EES and/or the first V-ECS.

S402: The first ECS sends an AF request to a PCF. Correspondingly, the PCF receives the AF request from the first ECS, where the AF request is used to request to configure a data forwarding path from the UE to the first V-EES and/or the first V-ECS.

The AF request may also be referred to as an AF transaction (transaction) or the like, and may affect a routing decision of session traffic. For example, the AF request is used to request to configure a data forwarding path from the UE to a target network element. The target network element is, for example, the first V-EES and/or the first V-ECS. The data forwarding path from the UE to the first V-EES and/or the first V-ECS may include: a data forwarding path from the UE to the first V-EES, and/or a data forwarding path from the UE to the first V-ECS. The data forwarding path may also be referred to as a data transmission path, a data forwarding channel, a data transmission channel, a data channel, or the like. It should be understood that the data forwarding path is a specific implementation of a traffic steering rule. From this perspective, the data forwarding path may also be referred to as a traffic steering rule, a forwarding rule, a data steering rule, a data forwarding rule, or the like.

Configuring the data forwarding path from the UE to the target network element may also be understood as controlling routing of traffic of the UE to the target network element. Therefore, it may be understood as that the AF request is used to request to control the routing of the traffic of the UE to the target network element, or the AF request may indicate the target network element to which the traffic of the UE needs to be routed. For example, the AF request is used to request to route the traffic from the UE to the first V-EES and/or the first V-ECS. In other words, a destination address of the traffic of the UE is an address of the first V-EES and/or an address of the first V-ECS. The traffic may also be referred to as data, a data packet, information, or the like.

The target network element is a network element corresponding to the destination address. Correspondingly, the AF request may include the information about the first V-EES and/or the information about the first V-ECS. Specifically, the information about the first V-EES includes an identifier of the first V-EES, address information of the first V-EES, and/or the like. Similarly, the information about the first V-ECS includes an identifier of the first V-ECS, address information of the first V-ECS, and/or the like. For ease of description, the following uses an example in which the information about the first V-EES is the address information of the first V-EES, and the information about the first V-ECS is the address information of the first V-ECS. It should be understood that the address information of the first V-EES may be replaced with the identifier of the first V-EES. The address information of the first V-ECS may be replaced with the identifier of the first V-ECS. It should be noted that, the first V-ECS may be the first ECS, or may be a V-ECS other than the first ECS. In other words, the first ECS and the first V-ECS may be a same V-ECS, or may be different V-ECSs. This is not limited in this embodiment of this application. For ease of distinguishing, when the first ECS and the first V-ECS are different V-ECSs, the first ECS is denoted as a second V-ECS.

After receiving the first request message, the first ECS may send the AF request to a core network, so that the core network can perform path configuration. In other words, the core network can configure a data forwarding path for the UE. For example, the first ECS sends the AF request to the PCF. Optionally, the first ECS may directly send the AF request to the PCF, or the first ECS may send the AF request to the PCF via an NEF. It should be understood that the core network may perform the path configuration by using a plurality of methods. The following provides an example for description.

S403: The PCF sends a second request message to a V-SMF.

The second request message is used to request to configure the data forwarding path from the UE to the first V-ECS and/or the first V-EES. A function of the second request message is similar to a function of the foregoing AF request. Details are not described again. Correspondingly, for example, the second request message may include the address information of the first V-EES and/or the address information of the first V-ECS. In addition, because the second request message is sent by the PCF, it may alternatively be considered that the second request message is used to configure/update a policy and charging control (policy and charging control, PCC) rule, or the second request message is used to configure/update a policy of a session, or the like. Alternatively, it may be considered that the second request message is used to configure the traffic steering rule, the data forwarding rule, or the like.

A specific name of the second request message is not limited in this embodiment of this application. For example, the second request message is also referred to as a traffic steering rule request message, a traffic steering rule configuration message, a traffic steering rule update message, a session management policy update message, a policy and charging control rule update message, or the like.

S404: The V-SMF configures a data forwarding rule for a V-UPF.

After obtaining the address information of the first V-EES and/or the address information of the first V-ECS, the V-SMF configures the data forwarding rule for the V-UPF. Configuring the data forwarding rule may also be considered as configuring the data forwarding path. The data forwarding rule may be a rule for forwarding data from the UE to the first V-EES and/or the first V-ECS. That the V-SMF configures a data forwarding rule for a V-UPF may also be understood as requesting the V-UPF to route traffic whose destination address is the address of the first V-EES to the first V-EES, and/or route traffic whose destination address is the address of the first V-ECS to the first V-ECS.

For example, the V-SMF may send a first message to the V-UPF, where the first message may include the address information of the first V-EES and/or the address information of the first V-ECS. Correspondingly, after receiving the first message, the V-UPF may obtain the address information of the first V-EES and/or the address information of the first V-ECS from the first message, so that the V-UPF may configure the rule for forwarding the data from the UE to the first V-EES and/or the first V-ECS. Subsequently, the V-UPF may send data whose destination address is the address of the first V-EES to the first V-EES, and/or send data whose destination address is the address of the first V-ECS to the first V-ECS. Specific implementation of the first message is not limited in this embodiment of this application. For example, the first message may be an interface message between the V-SMF and the V-UPF, for example, an N4 message, or may be a message of another type.

Optionally, the V-SMF sends information about a packet detection rule (packet detection rule, PDR) and a corresponding forwarding action rule (forwarding action rule, FAR) to the V-UPF by using the first message. The PDR includes the address information of the first V-EES and/or the address information of the first V-ECS. Therefore, the V-UPF performs address matching on a received data packet based on the address information of the first V-EES and/or the address information of the first V-ECS. It may be understood that if a destination address of a data packet matches an address included in the PDR, the data packet successfully matches the PDR. Data that matches the address of the first V-ECS is sent to the first V-ECS, and data that matches the address of the first V-EES is sent to the first V-EES. It may also be considered that the V-UPF obtains the PDR and the FAR from the first message, and performs data detection based on the PDR, to form the data forwarding path, and forward data based on the FAR.

S405: The V-UPF sends a configuration response message to the V-SMF.

After configuring the rule for forwarding the data from the UE to the first V-EES and/or the first V-ECS, the V-UPF may send the configuration response message to the V-SMF, to indicate that the configuration is completed. It may also be considered that the V-UPF may indicate, by using the configuration response message, that the configuration is completed. For example, the configuration response message may indicate that the configuration is completed. Specifically, the configuration response message indicates the V-UPF to configure the data forwarding rule, or indicates to configure the data forwarding path from the UE to the first V-EES and/or the first V-ECS.

S406: The V-SMF sends a user plane path change notification, where the user plane path change notification may indicate that the data forwarding path from the UE to the first V-EES and/or the first V-ECS is configured.

A user plane path may include the data forwarding path. In other words, the data forwarding path is a segment of the user plane path. If the data forwarding path from the UE to the first V-EES and/or the first V-ECS is configured, a user plane path of a session established by the UE changes. Therefore, after determining that the data forwarding path from the UE to the first V-EES and/or the first V-ECS is configured (or in other words, after determining that the data forwarding rule is configured), the V-SMF may send the user plane path change notification to the first ECS. After receiving the user plane path change notification, the first ECS sends a response message for the first request message to the UE. For the UE, it may be ensured that the user plane path has been configured when the response message for the first request message is received, so that a data packet (for example, a request for querying for an edge application server) subsequently sent by the UE may be successfully sent to the first V-EES and/or the first V-ECS. It should be noted that S406 is an optional step, and therefore is shown by using a dashed line in FIG. 4. Specifically, the user plane path change notification indicates that the data forwarding path from the UE to the first V-EES and/or the first V-ECS is configured.

A specific implementation of the user plane path change notification is not limited in this embodiment of this application. For example, the user plane path change notification may include a cause value of a user plane path change, and the cause value may indicate a reason why the user plane path changes. In other words, that the user plane path changes is implicitly indicated based on the cause value. In this embodiment of this application, for example, the reason why the user plane path changes is that the data forwarding path from the UE to the first V-EES and/or the first V-ECS is configured.

S407: The first ECS sends a first response message to the UE.

The first ECS may send the first response message to the UE in response to the first request message. In other words, the response message for the first request message is the first response message. The first response message may include a first V-ECS profile and/or a first V-EES profile. The first V-ECS profile may include the address information of the first V-ECS, provider (provider) information of the first V-ECS, and the like. The address information of the first V-ECS may include a URI, a fully qualified domain name (fully qualified domain name, FQDN), an IP address, and the like. The provider information of the first V-ECS may include identification information of a provider that deploys the first V-ECS. The first V-EES profile may include the address information, identification information, and a service area that are of the first V-EES, a direct network access, Inc. (direct network access, Inc., DNAI) to which the first V-EES belongs, and information about an EAS managed by the first V-EES. Because the UE may determine the first V-ECS based on the first V-ECS profile, and may also determine the first V-EES based on the first V-EES profile, the UE subsequently discovers the EAS via the first V-EES and/or the first V-ECS.

It may be understood that the first ECS may feed back the first V-EES profile in a manner of feeding back an EDN profile to the UE. In other words, that the first ECS sends a first response message to the UE may be that the first ECS sends the EDN profile to the UE. The EDN profile includes the first V-EES profile. Optionally, the EDN profile may further include S-NSSAI of a DNN to which an END belongs.

A specific name of the first response message is not limited in this embodiment of this application. For example, the first response message may be referred to as a service response message, a service provisioning response (service provisioning response) message, an availability response (availability response) message, or the like.

In this embodiment of this application, the first ECS sends the AF request to the core network, to request to configure a path from the UE to the first V-EES and/or the first V-ECS. Therefore, data subsequently sent by the UE to the first V-EES and/or the first V-ECS can be routed to a V-EES and/or a V-ECS in a visited domain, instead of being directly forwarded to a home domain. For example, the UE sends the service provisioning request, and a destination address of the service provisioning request is the address of the first V-ECS. After receiving the service provisioning request, the V-UPF sends the service provisioning request to the first V-ECS based on the configured data forwarding rule, instead of directly sending the service provisioning request to an H-UPF. In other words, the data forwarding path from the UE to the first V-ECS is implemented. For another example, the UE sends an EAS discovery request, where a destination address of the EAS discovery request is the address information of the first V-EES. After receiving the EAS discovery request, the V-UPF sends the EAS discovery request to the first V-EES based on the configured data forwarding rule, instead of directly sending the EAS discovery request to the H-UPF. It should be understood that the data forwarding path from the UE to the first V-EES is implemented. For a specific service discovery procedure, refer to FIG. 3.

In the procedure shown in FIG. 4, the first ECS may be a V-ECS, or may be an H-ECS, and the PCF may be a V-PCF, or may be an H-PCF. The procedure shown in FIG. 4 varies based on different implementations of the first ECS and the PCF. For ease of understanding, an example in which the first ECS is the V-ECS and an example in which the first ECS is the H-ECS are separately used to describe the communication method provided in this embodiment of this application.

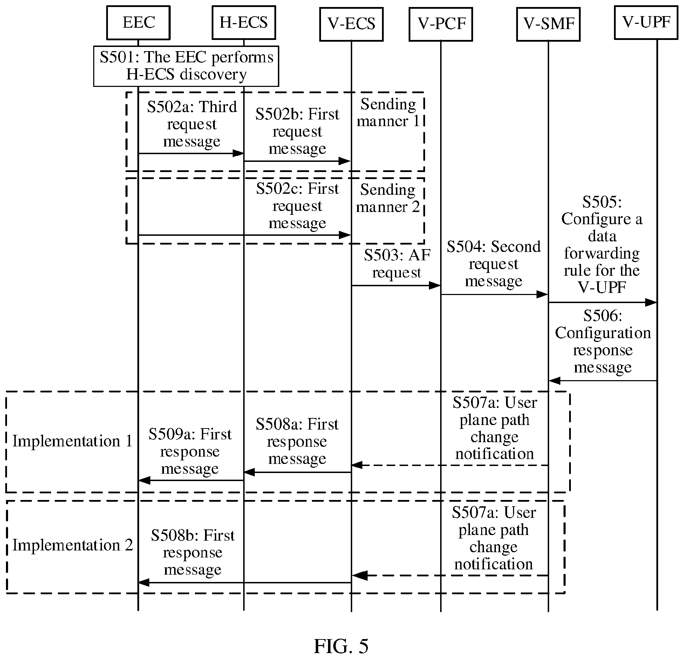

FIG. 5 is a flowchart of an example of a first communication method according to an embodiment of this application. In FIG. 5, an example in which a first ECS is a V-ECS is used.

S501: An EEC performs V-ECS discovery.

The EEC may discover the V-ECS. For details, refer to the content in S30. For example, the ECS in S30 is the V-ECS. Details are not described herein again. Alternatively, the EEC may discover the V-ECS via an H-ECS. The EEC discovers the V-ECS, and may directly send a first request message to the discovered V-ECS. In other words, the V-ECS may receive the first request message sent by the EEC. The EEC discovers the V-ECS via the H-ECS, and may also send a first request message to the discovered V-ECS via the H-ECS. In this case, the V-ECS may receive the first request message sent by the EEC via the H-ECS. In the following, a manner in which the EEC sends the first request message to the V-ECS via the H-ECS is referred to as a sending manner 1, and a manner in which the EEC directly sends the first request message to the V-ECS is referred to as a sending manner 2.

The sending manner 1 may be implemented by performing S502a and S502b.

S502a: The EEC sends a third request message to the H-ECS, where the third request message may include a roaming identifier and an application client profile.

The third request message may be used to request to use an MEC function of a VPLMN. A function of the third request message is similar to a function of the foregoing first request message. Details are not described again. The third request message may include the AC profile and the roaming identifier. For details, refer to related content in the first request message. Details are not described herein again.

It may be understood that when UE needs to access an MEC service of the VPLMN, the UE may send the third request message to the H-ECS. If the EEC is deployed in the UE, the UE may send the third request message to the H-ECS via the EEC. In this case, S502a may alternatively be understood as that the UE sends the third request message to the H-ECS. Correspondingly, the H-ECS receives the third request message from the UE. If the UE and the EEC are deployed independently, S502a is that the EEC sends the third request message to the H-ECS. Correspondingly, the H-ECS receives the third request message from the EEC.

S502b: The H-ECS sends the first request message to the V-ECS.

After receiving the third request message, the H-ECS may determine, based on the roaming identifier included in the third request message, that the UE that requests to access the MEC function is roaming UE, so that the H-ECS may send the first request message to a V-ECS corresponding to the roaming identifier. It may also be understood that the H-ECS sends the first request message to the V-ECS under triggering of the EEC (or under triggering of the UE).

The sending manner 2 may be implemented by performing S502c.

S502c: The EEC sends the first request message to the V-ECS.

If the EEC is deployed in UE, the UE may send the first request message to the V-ECS via the EEC. In this case, S502c may alternatively be understood as that the UE sends the first request message to the V-ECS. Correspondingly, the V-ECS receives the first request message from the UE. If the UE and the EEC are deployed independently, S502c is that the EEC sends the first request message to the V-ECS. Correspondingly, the V-ECS receives the first request message from the EEC.

In specific implementation, the sending manner 1 may be performed but the sending manner 2 is not performed; the sending manner 2 may be performed but the sending manner 1 is not performed; or the sending manner 1 and the sending manner 2 may be performed. In addition, both the sending manner 1 and the sending manner 2 are optional manners. In specific implementation, the EEC may alternatively send a request message to the V-ECS in another manner. This is not specifically limited.

It should be noted that for specific implementation of S502a to S502c, refer to related content in S401. Details are not described herein again.

The V-ECS receives the first request message from the H-ECS, and may query for information about a first V-EES and/or information about a first V-ECS based on an AC profile in the first request message.

The V-ECS receives the first request message, and may query for information about a first V-EES and/or information about a first V-ECS based on an AC profile in the first request message. For details, refer to related content in S401. Details are not described herein again.

S503: The V-ECS sends an AF request to a V-PCF, where the AF request may be used to request to configure a data forwarding path from the UE to the first V-EES and/or the first V-ECS. For details, refer to related content in S402. For example, the PCF in S402 is the V-PCF. Details are not described herein again.

S504: The V-PCF sends a second request message to a V-SMF, where the second request message is used to request to configure the data forwarding path from the UE to the first V-EES and/or the first V-ECS.

The V-PCF sends the second request message to the V-SMF in a plurality of sending manners. For example, the V-PCF sends the second request message to an H-PCF, the H-PCF sends the second request message to an H-SMF, and then the H-SMF sends the second request message to the V-SMF. For another example, the V-PCF may send the second request message to an H-PCF, then the H-PCF sends the second request message to the V-PCF, and then the V-PCF sends the second request message to the V-SMF.

S505: The V-SMF configures a data forwarding rule for a V-UPF, where the data forwarding rule includes the data forwarding path from the UE to the first V-EES and/or the first V-ECS. For the data forwarding rule and how to configure the data forwarding rule, refer to related content in S404. Details are not described herein again.

S506: The V-UPF sends a configuration response message, that is, a response message for a first message, to the V-SMF.

The configuration response message may indicate that the V-UPF configures the data forwarding path from the UE to the first V-EES and/or the first V-ECS, that is, the configuration is completed.

S507a: The V-SMF sends a user plane path change notification to the V-ECS. For details, refer to related content in S406. Details are not described herein again.

The V-ECS receives the user plane path change notification, and may send, to the EEC, a response message for the first request message. For example, the response message is referred to as a first response message. A procedure of sending the first response message to the EEC varies based on the two manners of sending the first request message. Specifically, the following implementation 1 and implementation 2 may be included. It may be understood that the implementation 1 corresponds to the foregoing sending manner 1, and the implementation 2 corresponds to the foregoing sending manner 2.

The implementation 1 may be implemented by performing S508a and S509a. The V-ECS sends the first response message to the EEC via the H-ECS.

S508a: The V-ECS sends the first response message to the H-ECS.

S509a: The H-ECS sends the first response message to the EEC.

The implementation 2 may be implemented by performing S508b. The V-ECS directly sends the first response message to the EEC.

S508b: The V-ECS sends the first response message to the EEC.

For specific implementation of the first response message, refer to related content in S407. Details are not described herein again.

It may be understood that, if the foregoing sending manner 1 is performed, the implementation 1 is performed; or if the foregoing sending manner 2 is performed, the implementation 2 is performed.

It should be noted that, for specific implementation of a message, a step, and the like in FIG. 5, refer to related content in FIG. 4. Details are not described again.

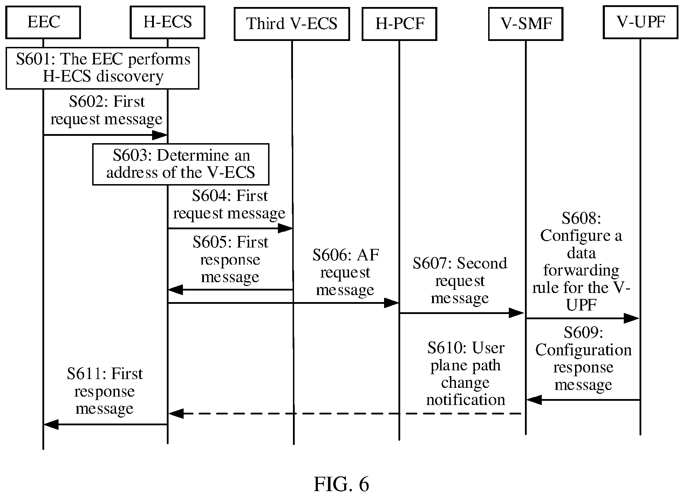

FIG. 6 is a flowchart of an example of a first communication method according to an embodiment of this application. In FIG. 6, an example in which a first ECS is an H-ECS is used.

S601: An EEC performs H-ECS discovery.

The EEC may perform the H-ECS discovery to obtain an address of the H-ECS, to further query for a V-ECS via the H-ECS. For that an EEC performs H-ECS discovery, refer to related content in S30. For example, the ECS in S30 is the H-ECS. Details are not described herein again.

S602: The EEC sends a first request message to the H-ECS. For details, refer to related content in S401. For example, the first ECS in S401 is the H-ECS. Details are not described herein again.

S603: The H-ECS determines an address of the V-ECS.

After receiving the first request message, the H-ECS may determine, based on a roaming identifier, for example, a VPLMN ID, carried in the first request message that current UE is roaming UE. Alternatively, the H-ECS may determine, based on a roaming identifier, for example, information indicating roaming, carried in the first request message, that a service currently requested by UE is a roaming service. In this case, the H-ECS may query for roaming information and local information of registration that are of the UE to determine a V-ECS corresponding to the roaming UE. The V-ECS may be a first V-ECS, or may be a V-ECS other than the first V-ECS. For ease of distinguishing, the V-ECS is denoted as a third V-ECS. If the H-ECS may communicate with the third V-ECS, the H-ECS requests, from the third V-ECS, a V-EES corresponding to the roaming UE. It may also be understood that the H-ECS may obtain address information of the first V-ECS and/or address information of a first V-EES from the third V-ECS. The roaming information of the UE may include the roaming identifier, for example, the VPLMN ID. The local information of registration of the UE may include address information of a V-ECS corresponding to a PLMN ID. In other words, there may be a correspondence between the roaming identifier and the address information of the V-ECS.

S604: The H-ECS sends the first request message to the third V-ECS. For details, refer to related content in S502b. Details are not described herein again.

S605: The third V-ECS sends a first response message to the H-ECS, where the first response message includes a first V-EES profile. For specific implementation of the first response message, refer to related content in S407. Details are not described herein again.

S606: The H-ECS sends an AF request to an H-PCF, where the AF request may be used to request to configure a data forwarding path from the UE to the first V-EES and/or the first V-ECS.

The AF request may include the address information of the first V-EES and/or the address information of the first V-ECS. For details, refer to related content in S402. For example, the first ECS in S402 is the H-ECS, and the PCF is the H-PCF. Details are not described herein again. It should be understood that if S604 and S605 are performed, the AF request may include the address information of the first V-EES. If S604 and S605 are not performed, the AF request may include the address information of the first V-ECS.

S607: The H-PCF sends a second request message to a V-SMF, where the second request message includes the address information of the first V-EES and/or the address information of the first V-ECS.

Optionally, the H-PCF sends the second request message to an H-SMF, and then the H-SMF sends the second request message to the V-SMF. Alternatively, the H-PCF sends the second request message to a V-PCF, and then the V-PCF sends the second request message to the V-SMF.

S608: The V-SMF configures a data forwarding rule for a V-UPF, where the data forwarding rule includes the data forwarding path from the UE to the first V-EES and/or the first V-ECS. For details, refer to related content in S404. Details are not described herein again.

S609: The V-UPF sends a configuration response message to the V-SMF. For details, refer to related content in S405. Details are not described herein again.

S610: The V-SMF sends a user plane path change notification to the H-ECS.

S611: The H-ECS sends the first response message to the UE.

The H-ECS receives the user plane path change notification, and may send the first response message to the UE. The first response message includes the address information of the first V-ECS and/or the address information of the first V-EES. For details, refer to related content in S407. For example, the first ECS in S407 is the H-ECS. Details are not described herein again.

It should be noted that, for specific implementation of a message, a step, and the like in FIG. 6, refer to related content in FIG. 4. Details are not described again.

In the procedure shown in FIG. 6, after a session is established, a data forwarding path of the V-UPF is configured by sending the AF request by the H-ECS to the H-PCF, so that a service flow from the UE to the first V-ECS and/or the first V-EES may be steered via the V-UPF, instead of being forwarded to an H-UPF. For the roaming UE, although a session anchor is in the H-PCF, in the data forwarding path based on the V-UPF, a request for querying for an EAS may be enabled to be routed to a corresponding first V-EES and/or first V-ECS, to implement EAS discovery, to achieve an objective of supporting the roaming UE in accessing an edge application service in a VPLMN.

In the embodiments shown in FIG. 4 to FIG. 6, the data forwarding rule of the V-UPF is configured after a session is established, so that a service flow from a terminal device to the V-ECS and/or a V-EES can be steered via the V-UPF. In this way, a roaming terminal can be supported to access the edge application service in the VPLMN.

In an alternative implementation, the data forwarding path of the V-UPF may be generated when a roaming session is established, so that the service flow from the terminal device to the V-ECS and/or the V-EES may be steered via the V-UPF, instead of being forwarded to the H-UPF. The following describes an alternative solution.

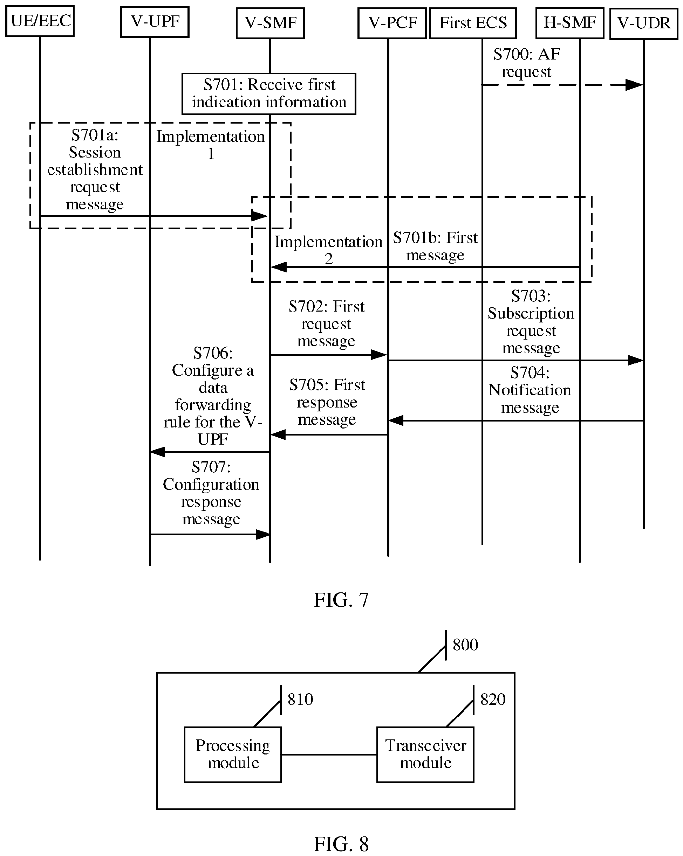

FIG. 7 is a flowchart of a second communication method according to an embodiment of this application. The communication method is applicable to the foregoing HR scenario. A procedure of the communication method is described as follows.

S701: A V-SMF receives first indication information, where the first indication information indicates that an MEC function of a VPLMN is used in a first HR session of UE.

Using the MEC function of the VPLMN may be understood as using an MEC service of the VPLMN or accessing an MEC service of the VPLMN. When the UE needs to use the MEC service, the UE may indicate, to the V-SMF based on the first indication information, that the MEC function of the VPLMN is used in the first HR session of the UE. The first indication information may indicate, in an implicit manner or an explicit manner, that the MEC function of the VPLMN is used in the first HR session of the UE. For example, the first indication information may be 1-bit information. If a value of the 1-bit is "0", it may indicate that the MEC function of the VPLMN is used in the first HR session of the UE; or if a value of the 1-bit is "1", it may indicate that the MEC function of the VPLMN is used in the first HR session of the UE. In other words, the first indication information explicitly indicates that the MEC service is used in the first HR session of the UE. For another example, the first indication information may be a roaming identifier, for example, a VPLMN ID. The roaming identifier indicates that the MEC service of the VPLMN is used in the first HR session of the UE, that is, implicitly indicates that the MEC service is used.

A sending occasion of the first indication information is not limited in this embodiment of this application. For example, the first indication information may be sent when a session is requested to be established, or may be sent in a session establishment process. The following describes a specific example.

Example 1: The first indication information is sent when the session is requested to be established. For example, the UE sends the first indication information when the session is requested to be established.

S701a: The UE sends a session establishment request message to the V-SMF, where the session establishment request message includes the first indication information.

The session establishment request message may be used to request to establish the session, for example, the first HR session. A name of the session establishment request message is not limited in this embodiment of this application. For example, the session establishment request message may also be referred to as a session modification request message. The session establishment request message may include the first indication information to indicate that the MEC service of the VPLMN is used.

Example 2: The first indication information is sent in the session establishment process. For example, the first indication information is carried in a message exchanged between an H-SMF and the V-SMF in the session establishment process.

S701b: The H-SMF sends a first message to the V-SMF, where the first message includes the first indication information.

The first message may be an interface message between the H-SMF and the V-SMF. For example, the first message is an N16 message.

It should be noted that it is not necessary to perform both S701a and S701b. For example, S701a may be performed, and S701b is not performed; or S701b may be performed, and S701a is not performed.

S702: The V-SMF sends a first request message to a V-PCF, where the first request message indicates that the MEC function of the VPLMN is requested to be used in the first HR session of the UE.

The first request message may be used to request to use the MEC function of the VPLMN. Alternatively, it may be understood that the first request message may be used to request to access the MEC service of the VPLMN. Alternatively, the first request message may be used to request a session management policy related to roaming UE, or used to request a session management policy related to the first HR session established by the UE. A specific name of the first request message is not limited in this embodiment of this application. For example, the first request message may be referred to as a service request message, or may be referred to as a service provisioning request (service provisioning request) message. For another example, the first request message may also be referred to as an availability request (availability request) message.

The first request message may include the first indication information, or may include one or more of the following corresponding to the UE: a generic public subscription identifier (generic public subscription identifier, GPSI), a subscription permanent identifier (subscription permanent identifier, SUPI), a data network name (data network name, DNN), single network slice selection assistance information (single network slice selection assistance information, S-NSSAI), or an identifier of the first HR session. It may be understood that the GPSI may indicate the UE. For another example, the SUPI also indicates the UE. Alternatively, the DNN and the S-NSSAI may indicate the first HR session, the UE that establishes the first HR session, or the like.

S703: The V-PCF obtains, from a V-UDR network element, address information of a first V-ECS associated with the first HR session and/or address information of a first V-EES associated with the first HR session.

After receiving the first request message, the PCF may request, from a data management network element, a V-ECS and/or a V-EES that support/supports the first HR session, or request to obtain a V-ECS and/or a V-EES that are/is associated with the first HR session. The V-ECS that supports the first HR session may also be understood as an available V-ECS. Similarly, the V-EES that supports the first HR session is an available V-EES. From this perspective, the first request message may alternatively be used to request the available V-ECS and/or V-EES. Same as content in S401, in this embodiment of this application, an example in which the available V-ECS is denoted as the first V-ECS, and the available V-EES is denoted as the first V-EES is used.

In an example, the V-PCF may send a subscription request message to the V-UDR network element, where the subscription request message is used to request to subscribe to a notification message of an AF request associated with the first HR session (where this is used as an example in S703). It may also be considered that the V-PCF requests, from the V-UDR, a subscription notification of the AF request. The subscription request message may include an index for obtaining the AF request corresponding to the UE or the first HR session. For example, the subscription request message may include an identifier of the UE and/or the identifier of the first HR session of the UE. In other words, the identifier of the UE and/or the identifier of the first HR session of the UE are/is the index for obtaining the AF request. The identifier of the UE may be one or more of a GPSI, a DNN, or S-NSSAI, or may include a group ID of a group to which the UE belongs, or an application descriptor of the UE. The subscription request message may alternatively include the identifier of the first HR session of the UE, and the like. For example, the identifier of the UE may be the SUPI or the GPSI of the UE, or the identifier of the UE may be the DNN and the S-NSSAI that correspond to the UE. The V-PCF sends the identifier of the UE to the V-UDR, to indicate that the AF request corresponding to the identifier of the UE needs to be obtained, and a message for obtaining the AF request does not need to be sent additionally. This may reduce signaling exchange. The identifier of the first HR session may include the DNN and the S-NSSAI that correspond to the UE. The V-PCF sends the identifier of the first HR session to the V-UDR, to indicate that the AF request corresponding to the first HR session needs to be obtained, and the message for obtaining the AF request does not need to be sent additionally. This reduces the signaling exchange.

The V-UDR network element may store, based on the AF request, the address information of the first V-ECS associated with the UE or the first HR session and/or the address information of the first V-EES associated with the UE or the first HR session. When receiving the subscription request message, the V-UDR network element may query for, based on content, for example, the identifier of the first HR session, included in the subscription request message, the AF request associated with the first HR session, to obtain the address information of the first V-ECS associated with the first HR session and/or the address information of the first V-EES associated with the first HR session. Then, the V-UDR sends the notification message to the V-PCF, where the notification message includes the address information of the first V-ECS and/or the address information of the first V-EES.

It should be noted that, the address information of the first V-ECS and/or the address information of the first V-EES may be stored in the data management network element by a first ECS based on the AF request. The data management network element may be UDM, or may be a UDR. In this embodiment of this application, an example in which the data management network element is the UDR is used. The first ECS may be a visited ECS, for example, the first V-ECS or a second V-ECS. This is not limited in this embodiment of this application. For example, the UDR is the V-UDR, and the first ECS may perform S700.

S700: The first ECS may send the AF request to the V-UDR. Correspondingly, the V-UDR receives the AF request from the first ECS.

The first ECS may indicate, based on the AF request, the V-UDR to store the address information of the first V-ECS and/or the address information of the first V-EES, to facilitate subsequent EAS discovery. The AF request may include the address information of the first V-ECS and/or the address information of the first V-EES. It may be understood that the AF request may be an AF request related to the roaming UE, or an AF request related to a session established by the roaming UE. Correspondingly, the AF request may include a roaming identifier, and the roaming identifier indicates whether the UE is the roaming UE. For example, the roaming identifier may be a VPLMN ID, or indication information indicating roaming. The AF request may further include an index, for example, the identifier of the UE and/or the identifier of the first HR session, for querying for the address information of the first V-ECS and/or the address information of the first V-EES. The identifier of the UE may include one or more of the GPSI, the DNN, or the S-NSSAI, or may include the group ID of the group to which the UE belongs, the application descriptor of the UE, or the like. The identifier of the first HR session, for example, the DNN, the S-NSSAI, the application identifier, and/or the like that correspond/corresponds to the UE, may indicate the first HR session or the UE that establishes the first HR session.

The V-UDR receives the AF request, and may store the address information of the first V-EES corresponding to the roaming identifier of the UE and/or the address information of the first V-ECS corresponding to the roaming identifier of the UE that are/is carried in the AF request. Optionally, the first ECS may alternatively send the AF request to the V-UDR via a network exposure function network element, to store, in the V-UDR based on the AF request, the address information of the first V-ECS corresponding to the roaming UE and/or the address information of the first V-EES corresponding to the roaming UE. This facilitates subsequent EAS discovery. It should be noted that if the first ECS sends the AF request to the V-UDR via the network exposure function network element, the AF request further includes the GPSI of the UE. In this way, the network exposure function network element queries for other information about a terminal device, for example, the SUPI, based on the GPSI of the UE. Therefore, the network exposure function network element may store, in the V-UDR, the address information of the first V-ECS corresponding to the UE and/or the address information of the first V-EES corresponding to the UE.

It should be noted that an execution occasion of S700 is not limited in this embodiment of this application, provided that the address information of the first V-ECS corresponding to the UE and/or the address information of the first V-EES corresponding to the UE are/is stored in the V-UDR. It may also be considered that S700 is performed independently from S701 to S703, or an execution sequence of S700 and S701 to S703 is not limited. During specific execution, if the V-DUR has stored the address information of the first V-ECS corresponding to the UE and/or the address information of the first V-EES corresponding to the UE, S700 may not be performed. Therefore, S700 is shown by using a dashed line in FIG. 7.

S704: The V-UDR sends the notification message to the V-PCF. Correspondingly, the V-PCF receives the notification message from the V-UDR, where the notification message includes the address information of the first V-EES and/or the address information of the first V-ECS.

The V-UDR stores the address information of the first V-EES corresponding to the UE or the first HR session and/or the address information of the first V-ECS corresponding to the UE or the first HR session. Therefore, the V-UDR may determine, based on content, for example, the identifier of the first HR session of the UE, included in the subscription request message, the address information of the first V-EES corresponding to the first HR session and/or the address information of the first V-ECS corresponding to the first HR session. After determining the address information of the first V-EES corresponding to the first HR session and/or the address information of the first V-ECS corresponding to the first HR session, the V-UDR sends the notification message to the V-PCF, where the notification message includes the address information of the first V-EES and/or the address information of the first V-ECS.

S705: The V-PCF sends a first response message to the V-SMF. Correspondingly, the V-SMF receives the first response message from the V-PCF, where the first response message includes the address information of the first V-ECS and/or the address information of the first V-EES.

The V-PCF may directly send the first response message to the V-SMF. Alternatively, the V-PCF may send the first response message to the H-PCF, the H-PCF forwards the first response message to an H-SMF, and then the H-SMF forwards the first response message to the V-SMF. Alternatively, the V-PCF may send the first response message to the H-PCF, the H-PCF forwards the first response message to the V-PCF, and then the V-PCF forwards the first response message to the V-SMF.

S706: The V-SMF configures a data forwarding rule for a V-UPF.

After obtaining the address information of the first V-EES and/or the address information of the first V-ECS, the V-SMF configures the data forwarding rule for the V-UPF. The data forwarding rule may be a rule for forwarding data from the UE to the first V-EES and/or the first V-ECS. For details, refer to related content in S404. Details are not described herein again.

S707: The V-UPF sends a configuration response message to the V-SMF. For details, refer to related content in S405. Details are not described herein again.

In this embodiment of this application, when the session is established, a data forwarding path from the roaming UE to the first V-ECS and/or the first V-EES may be configured via the V-UPF, so that data subsequently sent by the UE to the first V-EES and/or the first V-ECS can be routed to the first V-EES and/or the first V-ECS in a visited domain, instead of being directly forwarded to a home domain. Therefore, a message sent by the roaming UE to a V-ECS and/or a V-EES can be routed to the VPLMN. In this way, a request that is sent by a roaming terminal and that is for querying for an EAS can be routed to the visited ECS and/or the visited EES, to implement the EAS discovery, to achieve an objective of supporting the roaming UE in accessing an edge application service in the VPLMN.

In embodiments provided in this application, the method provided in embodiments of this application is described separately from perspectives of interaction between network elements included in the HLPMN and the VPLMN. To implement functions in the method provided in the foregoing embodiments of this application, correspondingly, an embodiment of this application further provides a corresponding communication apparatus. The communication apparatus may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

An embodiment of this application further provides a communication apparatus. The following describes, with reference to the accompanying drawings, communication apparatuses configured to implement the foregoing methods in embodiments of this application.

FIG. 8 is a schematic block diagram of a communication apparatus 800 according to an embodiment of this application. The communication apparatus 800 may include a processing module 810 and a transceiver module 820. Optionally, a storage unit may be further included. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing units may be independently disposed, or may be partially or completely integrated.

It should be understood that the processing module 810 may be a processor or a controller, for example, may be a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 820 is an interface circuit of the apparatus, and is configured to receive a signal from another apparatus. For example, when the apparatus is implemented in a form of a chip, the transceiver module 820 is an interface circuit used by the chip to receive a signal from another chip or apparatus, or is an interface circuit used by the chip to send a signal to another chip or apparatus.

The communication apparatus 800 may be the edge configuration server, the policy control function network element, or the session management network element in the foregoing embodiments, or may be a chip used for the edge configuration server, the policy control function network element, or the session management network element. For example, when the communication apparatus 800 is the edge configuration server, the policy control function network element, or the session management network element, the processing module 810 may be, for example, a processor, and the transceiver module 820 may be, for example, a transceiver. Optionally, the transceiver may include a radio frequency circuit, and the storage unit may be, for example, a memory. For example, when the communication apparatus 800 is the chip used for the edge configuration server, the policy control function network element, or the session management network element, the processing module 810 may be, for example, a processor, and the transceiver module 820 may be, for example, an input/output interface, a pin, or a circuit. The processing module 810 may execute computer-executable instructions stored in the storage unit. Optionally, the storage unit is a storage unit in the chip, for example, a register or a buffer. Alternatively, the storage unit may be a storage unit that is in a network device, a terminal, or a location management device and that is located outside the chip, for example, a read-only memory (read-only memory, ROM), another type of static storage device that can store static information and instructions, or a random access memory (random access memory, RAM).

In a possible implementation, the communication apparatus 800 can correspondingly implement behavior and a function of the ECS (for example, the V-ECS or the H-ECS) in the foregoing method embodiments. The communication apparatus 800 may be the ECS, may be a component (for example, a chip or a circuit) used in the ECS, may be a chip or a chip group in the ECS, or may be a part of a chip that is configured to perform a related method function. The transceiver module 820 may be configured to support communication between the ECS and another network entity, for example, support communication between the ECS and the PCF shown in any one of FIG. 4 to FIG. 7. The processing module 810 is configured to control and manage an action of the ECS. For example, the processing module 810 is configured to support the ECS in performing all operations, except sending and receiving operations, of the ECS in any one of the embodiments in FIG. 4 to FIG. 7.

For example, the transceiver module 820 is configured to: receive a first request message, send an AF request to the policy control function network element, and send a first response message. The first request message includes an application client profile. The AF request is used to request to configure a data forwarding path from a terminal to a first V-EES and/or a first V-ECS. The first response message is a response message for the first request message.

In an optional implementation, the AF request may include address information of the first V-EES and/or address information of the first V-ECS.

In an optional implementation, the transceiver module 820 is further configured to: before sending the first response message, receive a user plane path change notification from a V-SMF.

In an optional implementation, the first response message includes a first V-EES profile and/or a first V-ECS profile.

In an optional implementation, the processing module 810 is configured to determine the first V-EES and/or the first V-ECS based on the application client profile.

In an optional implementation, if the communication apparatus 800 is the first V-ECS or a second V-ECS, the transceiver module 820 is configured to: receive the first request message from an H-ECS, and send the first response message to the H-ECS. Alternatively, if the communication apparatus 800 is the first V-ECS or a second V-ECS, the transceiver module 820 is configured to: receive the first request message from an EEC, and send the response message for the first request message to the EEC.

In an optional implementation, the communication apparatus 800 is the first V-ECS or the second V-ECS, and the policy control function network element is a V-PCF. Alternatively, the communication apparatus 800 is an H-ECS, and the policy control function network element is an H-PCF.

In an optional implementation, the communication apparatus 800 is the H-ECS, and the processing module 810 is configured to obtain the first V-EES and/or the first V-ECS from a third V-ECS.

In another possible implementation, the communication apparatus 800 can correspondingly implement behavior and a function of the policy control function network element (for example, including the V-PCF or the H-PCF) in the foregoing method embodiments. The communication apparatus 800 may be the policy control function network element, may be a component (for example, a chip or a circuit) used in the policy control function network element, may be a chip or a chip group in the policy control function network element, or may be a part of a chip that is configured to perform a related method function. The transceiver module 820 may be configured to support communication between the policy control function network element and another network entity, for example, support communication between the policy control function network element and the V-ECS shown in any one of the embodiments in FIG. 4 to FIG. 7. The processing module 810 is configured to control and manage an action of the policy control function network element. For example, the processing module 810 is configured to support the policy control function network element in performing all operations, except sending and receiving operations, of the policy control function network element in any one of the embodiments in FIG. 4 to FIG. 7.

For example, the transceiver module 820 is configured to: receive an AF request, and send a second request message to a V-SMF based on the AF request. The AF request is used to request to configure a data forwarding path from a terminal to a first V-EES and/or a first V-ECS. The second request message includes address information of the first V-EES and/or address information of the first V-ECS.

In an optional implementation, the AF request includes the address information of the first V-EES and/or the address information of the first V-ECS.

For another example, the transceiver module 820 is configured to: receive a first request message from a session management function network element, obtain, from a data management network element, address information of a first V-EES associated with a first HR session of UE and/or an address of a first V-ECS associated with a first HR session of UE, and send a first response message to the session management function network element. The first request message indicates that an edge computing function of a VPLMN is requested to be used in the first HR session of the UE. The first response message includes the address information of the first V-EES and/or the address information of the first V-ECS.

In an optional implementation, the first request message includes one or more of the following corresponding to the UE: a GPSI, an SUPI, a DNN, S-NSSAI, or an identifier of the first HR session.

In an optional implementation, the transceiver module 820 is specifically configured to: send a subscription request message to the data management network element, and receive a notification message from the data management network element. The subscription request message is used to request to subscribe to a notification message of the AF request associated with the first HR session of the UE. The notification message includes the address information of the first V-EES associated with the first HR session and/or the address information of the first V-ECS associated with the first HR session.

In an optional implementation, the address information of the first V-EES and/or the address information of the first V-ECS are/is stored in the data management network element by a first edge configuration server ECS based on the AF request.

Optionally, the edge configuration server is a first visited edge configuration server, and the data management network element is a visited data management network element.

In another possible implementation, the communication apparatus 800 can correspondingly implement behavior and a function of the session management function network element (for example, including the H-SMF or the V-SMF) in the foregoing method embodiments. The communication apparatus 800 may be the session management function network element, may be a component (for example, a chip or a circuit) used in the session management function network element, may be a chip or a chip group in the session management function network element, or may be a part of a chip that is configured to perform a related method function. The transceiver module 820 may be configured to support communication between the session management function network element and another network entity, for example, support communication between the session management function network element and the visited policy control function network element shown in any one of the embodiments in FIG. 4 to FIG. 7. The processing module 810 is configured to control and manage an action of the session management function network element. For example, the processing module 810 is configured to support the session management function network element in performing all operations, except sending and receiving operations, of the session management function network element in any one of the embodiments in FIG. 4 to FIG. 7.

For example, the transceiver module 820 is configured to: receive a second request message from a policy control function, and configure, for a visited user plane function, a rule for forwarding data to a first V-EES and/or a first V-ECS. The second request message includes address information of the first V-EES and/or address information of the first V-ECS.

For another example, the transceiver module 820 is configured to: receive first indication information, send a first request message to a visited policy control function network element, and receive a first response message from the V-PCF. The first indication information indicates that an edge computing function of a VPLMN is used in a first HR session of UE. The first request message indicates that the edge computing function of the VPLMN is used in the first HR session of the UE. The first response message includes address information of a first V-EES and/or address information of a first V-ECS.

In an optional manner, that the transceiver module 820 receives first indication information includes:

The transceiver module 820 is configured to receive a session establishment request message from UE, where the session establishment request message includes the first indication information. Alternatively, the transceiver module 820 is configured to receive a session modification request message from UE, where the session modification request message includes the first indication information.

In an optional manner, the transceiver module 820 is further configured to configure, to the visited policy control function network element, a rule for forwarding data to the first V-ECS and/or the first V-EES.

In another possible implementation, the communication apparatus 800 can correspondingly implement behavior and a function of the data management network element in the foregoing method embodiments. The communication apparatus 800 may be the data management network element, may be a component (for example, a chip or a circuit) used in the data management network element, may be a chip or a chip group in the data management network element, or may be a part of a chip that is configured to perform a related method function. The transceiver module 820 may be configured to support communication between the data management network element and another network entity, for example, support communication between the data management network element and the policy control function shown in any one of the embodiments in FIG. 4 to FIG. 7. The processing module 810 is configured to control and manage an action of the data management network element. For example, the processing module 810 is configured to support the data management network element in performing all operations, except sending and receiving operations, of the data management network element in any one of the embodiments in FIG. 4 to FIG. 7.

For example, the transceiver module 820 is configured to: receive an AF request from an edge configuration server, and store, based on the AF request, address information of a first V-ECS and/or address information of a first V-EES. The AF request includes one or more of the following: the address information of the first V-ECS and/or the address information of the first V-EES, a roaming identifier, an identifier of UE, or a session identifier, where the roaming identifier indicates whether the UE is roaming UE, and the identifier of the UE includes one or more of the following: a GPSI, a SUPI, a DNN, S-NSSAI, or an application descriptor of the UE. The session identifier includes the DNN, the S-NSSAI, and/or the application descriptor that correspond/corresponds to the UE.

In an optional implementation, the transceiver module 820 is further configured to: receive a subscription request message from the policy control function network element, and send a notification message to a visited policy control function network element. The subscription request message is used to request to subscribe to a notification message of the AF request associated with a first HR session, and the notification message includes the address information of the first V-ECS associated with the first HR session and/or the address information of the first V-EES associated with the first HR session.

It should be understood that, in this embodiment of this application, the processing module 810 may be implemented by a processor or a processor-related circuit component, and the transceiver module 820 may be implemented by a transceiver or a transceiver-related circuit component.

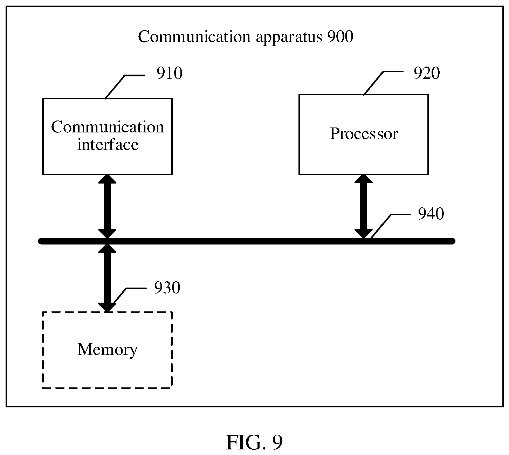

FIG. 9 shows a communication apparatus 900 according to an embodiment of this application. The communication apparatus 900 may be an edge configuration server, and can implement a function of the edge configuration server in the method provided in embodiments of this application. Alternatively, the communication apparatus 900 may be a session management network element, and can implement a function of the session management network element in the method provided in embodiments of this application. Alternatively, the communication apparatus 900 may be a policy control function network element, and can implement a function of the policy control function network element in the method provided in embodiments of this application. Alternatively, the communication apparatus 900 may be an apparatus that can support a policy control function network element, a session management network element, or an edge configuration server in implementing a corresponding function in the method provided in embodiments of this application. The communication apparatus 900 may be a chip system. In this embodiment of this application, the chip system may include a chip, or may include a chip and another discrete device.

In hardware implementation, the transceiver module 820 may be a transceiver, and the transceiver is integrated into the communication apparatus 900 to form a communication interface 910.

The communication apparatus 900 includes at least one processor 920. The processor 920 may be a CPU, a microprocessor, an ASIC, or one or more integrated circuits configured to control program execution of the solutions in this application, and is configured to implement or support the communication apparatus 900 in implementing the function of the policy control function network element, the session management network element, or the edge configuration server in the method provided in embodiments of this application. For details, refer to the detailed descriptions in the method examples. Details are not described herein again.

The communication apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may cooperate with the memory 930. The processor 920 may execute the program instructions and/or the data stored in the memory 930, so that the communication apparatus 900 implements a corresponding method. At least one of the at least one memory may be included in the processor 920.

The communication apparatus 900 may further include the communication interface 910, and is configured to communicate with another device or a communication network, such as a radio access network (radio access network, RAN), a wireless local area network (wireless local area network, WLAN), or a wired access network via any apparatus such as a transceiver. The communication interface 910 is configured to communicate with the another device via a transmission medium, so that an apparatus in the communication apparatus 900 may communicate with the another device. For example, when the communication apparatus 900 is the edge configuration server, the another device is the policy control function network element or the session management network element; or when the communication apparatus is the policy control function network element, the another device is the session management network element or the edge configuration server. The processor 920 may send and receive data through the communication interface 910. The communication interface 910 may be specifically a transceiver.

A specific connection medium between the communication interface 910, the processor 920, and the memory 930 is not limited in this embodiment of this application. In this embodiment of this application, in FIG. 9, the memory 930, the processor 920, and the communication interface 910 are connected through a bus 940, and the bus is represented by using a bold line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

The memory 930 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction or a data structure and that can be accessed by a computer. However, this is not limited herein. The memory may exist independently, and is connected to the processor through the communication line 940. The memory may alternatively be integrated with the processor.

The memory 930 is configured to store computer-executable instructions for executing the solutions in this application, and the processor 920 controls execution of the computer-executable instructions. The processor 920 is configured to execute the computer-executable instructions stored in the memory 930, to implement the method provided in embodiments of this application.

Optionally, the computer-executable instructions in this embodiment of this application may also be referred to as application program code. This is not specifically limited in this embodiment of this application.

It should be noted that the communication apparatus in the foregoing embodiments may be a terminal, a circuit, a chip used in a terminal, or another combined device, component, or the like that has a function of a terminal. When the communication apparatus is the terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be the radio frequency unit, and the processing module may be the processor. When the communication apparatus is a chip or a chip system, the transceiver module may be an input/output interface of the chip or the chip system, and the processing module may be a processor of the chip or the chip system.

An embodiment of this application further provides a communication system. Specifically, the communication system includes a policy control function network element, an edge configuration server, and a session management network element, or may further include more policy control function network elements, a plurality of session management network elements, and more edge configuration servers. It may be understood that the communication system may further include one or more of an AF, an NEF, a UDR, a BSF, or the like. For example, the communication system includes a policy control function network element, a session management network element, and an edge configuration server that are configured to implement related functions in any one of the embodiments shown in FIG. 4 to FIG. 7.

The edge configuration server is separately configured to implement a function of an edge configuration server part related to embodiments of this application, for example, configured to implement a function of a visited edge configuration server part or a function of a home edge configuration server part related to any one of the embodiments shown in FIG. 4 to FIG. 7. The policy control function network element is configured to implement a function of a policy control function network element part related to embodiments of this application, for example, configured to implement a function of a policy control function network element related to any one of the embodiments shown in FIG. 4 to FIG. 7. The session management network element is configured to implement a function of any session management network element part related to any one of FIG. 4 to FIG. 7. For details, refer to the related descriptions in the method embodiments. Details are not described herein again.

An embodiment of this application further provides a computer-readable storage medium, including instructions. When the computer-readable storage medium is run on a computer, the computer is enabled to perform the method performed by the policy control function network element, the session management network element, or the edge configuration server in any one of the embodiments shown in FIG. 4 to FIG. 7.

An embodiment of this application further provides a computer program product, including instructions. When the computer program product runs on a computer, the computer is enabled to perform the method performed by the policy control function network element, the session management network element, or the edge configuration server in any one of the embodiments shown in FIG. 4 to FIG. 7.

An embodiment of this application provides a chip system. The chip system includes a processor, may further include a memory, and is configured to implement functions of the policy control function network element, the session management network element, and the edge configuration server in the foregoing method. The chip system may include a chip, or may include a chip and another discrete device.

All or some of the methods provided in embodiments of this application may be implemented by using software, hardware, firmware, or any combination thereof. When the software is used to implement the methods, all or some of the methods may be implemented in a form of a computer program product. The computer program product includes one or more computer instructions. When the computer program instructions are loaded and executed on the computer, the procedures or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

In embodiments of this application, unless otherwise specified, a quantity of nouns indicates "a singular noun or a plural noun", that is, "one or more". "At least one" means one or more, and "a plurality of" means two or more. The term "and/or" describes an association relationship for describing associated objects and represents that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof indicates any combination of these items, including a singular item (piece) or any combination of plural items (pieces). For example, at least one item (piece) of a, b, or c indicates a, b, c, a and b, a and c, b and c, or a, b, and c, where a, b, and c may be singular or plural.

A person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a first edge configuration server ECS, a first request message, wherein the first request message comprises an application client AC profile;
sending, by the first ECS, an application function AF request to a policy control function PCF, wherein the AF request is used to request to configure a data forwarding path from a terminal to a first visited edge enabler server V-EES and/or a first visited edge configuration server V-ECS; and
sending, by the first ECS, a response message for the first request message.

2. The method according to claim 1, wherein the AF request comprises address information of the first V-EES and/or address information of the first V-ECS.

3. The method according to claim 1 or 2, wherein before the sending, by the first ECS, a response message, the method further comprises:
receiving, by the first ECS, a user plane path change notification from a visited session management function V-SMF.

4. The method according to any one of claims 1 to 3, wherein the response message comprises a first V-EES profile and/or a first V-ECS profile.

5. The method according to any one of claims 1 to 4, wherein the method further comprises:
determining, by the first ECS, the first V-EES and/or the first V-ECS based on the AC profile.

6. The method according to any one of claims 1 to 5, wherein the first ECS is the first V-ECS or a second V-ECS, and the receiving, by a first ECS, a first request message comprises: receiving, by the first ECS, the first request message from a home ECS; and
the sending, by the first ECS, a response message for the first request message comprises: sending, by the first ECS, the response message to the home ECS.

7. The method according to any one of claims 1 to 5, wherein the first ECS is the first V-ECS or a second V-ECS, and the receiving, by a first ECS, a first request message comprises: receiving, by the first ECS, the first request message from an edge enabler client EEC; and
the sending, by the first ECS, a response message for the first request message comprises: sending, by the first ECS, the response message to the EEC.

8. The method according to any one of claims 1 to 7, wherein the first ECS is the first V-ECS or the second V-ECS, and the PCF is a visited PCF.

9. The method according to any one of claims 1 to 5, wherein the first ECS is a home ECS, and the PCF is a home PCF.

10. The method according to any one of claims 1 to 5 or claim 9, wherein the first ECS is the home ECS, and the method further comprises:
obtaining, by the home ECS, information about the first V-EES and/or information about the first V-ECS from a third V-ECS.

11. A communication method, comprising:
receiving, by a policy control function PCF, an application function AF request, wherein the AF request is used to request a data forwarding path from a terminal to a first visited edge enabler server V-EES and/or a first visited edge configuration server V-ECS; and
sending, by the PCF, a second request message to a visited session management function V-SMF based on the AF request, wherein the second request message comprises address information of the first V-EES and/or address information of the first V-ECS.

12. The method according to claim 11, wherein the AF request message comprises the address information of the first V-EES and/or the address information of the first V-ECS.

13. A communication method, comprising:
receiving, by a visited session management function V-SMF, a second request message from a policy control function PCF, wherein the second request message comprises address information of a first visited edge enabler server V-EES and/or address information of a first visited edge configuration server V-ECS; and
configuring, by the V-SMF for a visited user plane function V-UPF, a rule for forwarding data to the first V-EES and/or the first V-ECS.

14. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 through a logic circuit or by executing code instructions.

15. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to claim 11 or 12 through a logic circuit or by executing code instructions.

16. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to claim 13 through a logic circuit or by executing code instructions.

17. A computer-readable storage medium, wherein the computer-readable storage medium stores computer instructions; and when the computer instructions are executed, a computer is enabled to perform the method according to any one of claims 1 to 10, perform the method according to claim 11 or 12, or perform the method according to claim 13.

18. A computer program product, wherein the computer program product comprises a computer program; and when the computer program is run, the method according to any one of claims 1 to 10 is performed, the method according to claim 11 or 12 is performed, or the method according to claim 13 is performed.

19. A communication system, comprising an edge configuration server, a policy control function network element, and a visited session management function network element, wherein the edge configuration server is configured to perform the method according to any one of claims 1 to 10, the policy control function network element is configured to perform the method according to claim 11 or 12, and the visited session management function network element is configured to perform the method according to claim 13.

20. A communication method, comprising:
receiving, by a policy control function PCF, an application function AF request, wherein the AF request is used to request a data forwarding path from a terminal to a first visited edge enabler server V-EES and/or a first visited edge configuration server V-ECS;
sending, by the PCF, a second request message to a visited session management function V-SMF based on the AF request, wherein the second request message comprises address information of the first V-EES and/or address information of the first V-ECS; and
receiving, by the V-SMF, the second request message, and configuring, for a visited user plane function V-UPF, a rule for forwarding data to the first V-EES and/or the first V-ECS.

21. The method according to claim 20, wherein the method further comprises:
receiving, by a first edge configuration server ECS, a first request message, wherein the first request message comprises an application client AC profile;
sending, by the first ECS, the AF request to the PCF; and
sending, by the first ECS, a response message for the first request message.

22. A communication method, comprising:
sending, by a first edge configuration server ECS, an application function AF request to a policy control function PCF, wherein the AF request is used to request a data forwarding path from a terminal to a first visited edge enabler server V-EES and/or a first visited edge configuration server V-ECS; and
receiving, by the PCF, the AF request, and sending a second request message to a visited session management function V-SMF based on the AF request, wherein the second request message comprises address information of the first V-EES and/or address information of the first V-ECS.

23. The method according to claim 22, wherein the method further comprises:
receiving, by the V-SMF, the second request message; and
configuring, by the V-SMF for a visited user plane function V-UPF, a rule for forwarding data to the first V-EES and/or the first V-ECS.

24. The method according to claim 22 or 23, wherein
before the sending, by a first ECS, an AF request to a PCF, the method further comprises:
sending, by a first device, a first request message to the first ECS, wherein the first request message comprises an application client AC profile; and
receiving, by the first ECS, the first request message; and
after the sending, by a first ECS, an AF request to a PCF, the method further comprises:
sending, by the first ECS, a response message for the first request message.

25. A communication system, comprising a policy control function PCF and a session management function SMF, wherein
the PCF is configured to:
receive an application function AF request, wherein the AF request is used to request a data forwarding path from a terminal to a first visited edge enabler server V-EES and/or a first visited edge configuration server V-ECS; and
send a second request message to the SMF based on the AF request, wherein the second request message comprises address information of the first V-EES and/or address information of the first V-ECS; and
the SMF is a visited session management function V-SMF, and is configured to:
receive the second request message; and
configure, for a visited user plane function V-UPF, a rule for forwarding data to the first V-EES and/or the first V-ECS.

26. The system according to claim 25, wherein the system further comprises a first edge configuration server ECS, configured to:
receive a first request message, wherein the first request message comprises an application client AC profile;
send the AF request to the PCF; and
send a response message for the first request message.

27. A communication system, comprising a first edge configuration server ECS and a policy control function PCF, wherein
the first ECS is configured to:
send an application function AF request to the PCF, wherein the AF request is used to request a data forwarding path from a terminal to a first visited edge enabler server V-EES and/or a first visited edge configuration server V-ECS; and
the PCF is configured to:
receive the AF request; and
send a second request message to a visited session management function V-SMF based on the AF request, wherein the second request message comprises address information of the first V-EES and/or address information of the first V-ECS.

28. The system according to claim 27, wherein the system further comprises an SMF, wherein the SMF is the V-SMF, and is configured to:
receive the second request message; and
configure, for a visited user plane function V-UPF, a rule for forwarding data to the first V-EES and/or the first V-ECS.

29. The system according to claim 27 or 28, wherein the system further comprises a first device, configured to send a first request message to the first ECS, wherein the first request message comprises an application client AC profile; and
the first ECS is further configured to:
receive the first request message; and
after sending the AF request to the PCF, send a response message for the first request message.
